# EUROPEAN PATENT APPLICATION

(11) **EP 3 606 131 A1**
(43) Date of publication of application: **05.02.2020**
(21) Application number: 18776349.5
(22) Date of filing: 28.02.2018
(51) Int. Cl.: H04W 16/28, H04B 7/04, H04B 7/06, H04W 8/22

(54) **COMMUNICATIONS SYSTEM**

(30) Priority: 27.03.2017 JP 2017060628
(71) Applicant: Mitsubishi Electric Corporation, Chiyoda-ku Tokyo 100-8310 (JP)
(72) Inventor: NAKAMURA, Kiyoshige, Tokyo 100-8310 (JP); NAKAZAWA, Masayuki, Tokyo 100-8310 (JP)
(74) Representative: Sajda, Wolf E.
(86) International application number: PCT/JP2018/007492
(87) International publication number: WO 2018/180151

(57) **Abstract**

A control overhead concerning beam selection of a base station and a terminal is reduced without reducing accuracy of the beam selection. A communication system includes a base station device, and at least one terminal device configured to be connected to the base station device so as to perform radio communication with the base station device. The base station device is configured to control a plurality of base station beams having different beam directions. The base station device transmits a reference signal through a corresponding base station beam. The reference signal is specific to each of the plurality of base station beams used by the at least one terminal device to measure reception quality of a signal from the base station device. The at least one terminal device notifies the base station device of terminal beam related information. The terminal beam related information concerns at least one terminal beam formed by the at least one terminal device. The base station device controls transmission of the reference signal through the plurality of base station beams, based on the terminal beam related information.

## Description

### Technical Field

The present invention relates to a communication system.

### Background Art

The 3rd generation partnership project (3GPP), the standard organization regarding the mobile communication system, is studying communication systems referred to as long term evolution (LTE) regarding radio sections and system architecture evolution (SAE) regarding the overall system configuration including a core network and a radio access network which is hereinafter collectively referred to as a network as well (for example, see Non-Patent Documents 1 to 7). This communication system is also referred to as 3.9 generation (3.9 G) system.

As the access scheme of the LTE, orthogonal frequency division multiplexing (OFDM) is used in a downlink direction and single carrier frequency division multiple access (SC-FDMA) is used in an uplink direction. Further, differently from the wideband code division multiple access (W-CDMA), circuit switching is not provided but a packet communication system is only provided in the LTE.

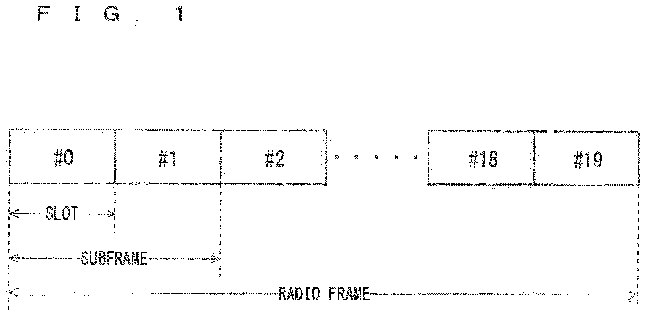

The decisions taken in 3GPP regarding the frame configuration in the LTE system described in Non-Patent Document 1 (Chapter 5) are described with reference to FIG. 1. FIG. 1 is a diagram illustrating the configuration of a radio frame used in the LTE communication system. With reference to FIG. 1, one radio frame is 10 ms. The radio frame is divided into ten equally sized subframes. The subframe is divided into two equally sized slots. The first and sixth subframes contain a downlink synchronization signal per radio frame. The synchronization signals are classified into a primary synchronization signal (P-SS) and a secondary synchronization signal (S-SS).

Non-Patent Document 1 (Chapter 5) describes the decisions by 3GPP regarding the channel configuration in the LTE system. It is assumed that the same channel configuration is used in a closed subscriber group (CSG) cell as that of a non-CSG cell.

A physical broadcast channel (PBCH) is a channel for downlink transmission from a base station device (hereinafter may be simply referred to as a "base station") to a communication terminal device (hereinafter may be simply referred to as a "communication terminal") such as a user equipment device (hereinafter may be simply referred to as a "user equipment"). A BCH transport block is mapped to four subframes within a 40 ms interval. There is no explicit signaling indicating 40 ms timing.

A physical control format indicator channel (PCFICH) is a channel for downlink transmission from a base station to a communication terminal. The PCFICH notifies the number of orthogonal frequency division multiplexing (OFDM) symbols used for PDCCHs from the base station to the communication terminal. The PCFICH is transmitted per subframe.

A physical downlink control channel (PDCCH) is a channel for downlink transmission from a base station to a communication terminal. The PDCCH notifies of the resource allocation information for downlink shared channel (DL-SCH) being one of the transport channels described below, resource allocation information for a paging channel (PCH) being one of the transport channels described below, and hybrid automatic repeat request (HARQ) information related to DL-SCH. The PDCCH carries an uplink scheduling grant. The PDCCH carries acknowledgement (Ack) / negative acknowledgement (Nack) that is a response signal to uplink transmission. The PDCCH is referred to as an L1/L2 control signal as well.

A physical downlink shared channel (PDSCH) is a channel for downlink transmission from a base station to a communication terminal. A downlink shared channel (DL-SCH) that is a transport channel and a PCH that is a transport channel are mapped to the PDSCH.

A physical multicast channel (PMCH) is a channel for downlink transmission from a base station to a communication terminal. A multicast channel (MCH) that is a transport channel is mapped to the PMCH.

A physical uplink control channel (PUCCH) is a channel for uplink transmission from a communication terminal to a base station. The PUCCH carries Ack/Nack that is a response signal to downlink transmission. The PUCCH carries a channel quality indicator (CQI) report. The CQI is quality information indicating the quality of received data or channel quality. In addition, the PUCCH carries a scheduling request (SR).

A physical uplink shared channel (PUSCH) is a channel for uplink transmission from a communication terminal to a base station. An uplink shared channel (UL-SCH) that is one of the transport channels is mapped to the PUSCH.

A physical hybrid ARQ indicator channel (PHICH) is a channel for downlink transmission from a base station to a communication terminal. The PHICH carries Ack/Nack that is a response signal to uplink transmission. A physical random access channel (PRACH) is a channel for uplink transmission from the communication terminal to the base station. The PRACH carries a random access preamble.

A downlink reference signal (RS) is a known symbol in the LTE communication system. The following five types of downlink reference signals are defined as: a cell-specific reference signal (CRS), an MBSFN reference signal, a data demodulation reference signal (DM-RS) being a UE-specific reference signal, a positioning reference signal (PRS), and a channel state information reference signal (CSI-RS). The physical layer measurement objects of a communication terminal include reference signal received powers (RSRPs).

The transport channels described in Non-Patent Document 1 (Chapter 5) are described. A broadcast channel (BCH) among the downlink transport channels is broadcast to the entire coverage of a base station (cell). The BCH is mapped to the physical broadcast channel (PBCH).

Retransmission control according to a hybrid ARQ (HARQ) is applied to a downlink shared channel (DL-SCH). The DL-SCH can be broadcast to the entire coverage of the base station (cell). The DL-SCH supports dynamic or semi-static resource allocation. The semi-static resource allocation is also referred to as persistent scheduling. The DL-SCH supports discontinuous reception (DRX) of a communication terminal for enabling the communication terminal to save power. The DL-SCH is mapped to the physical downlink shared channel (PDSCH).

The paging channel (PCH) supports DRX of the communication terminal for enabling the communication terminal to save power. The PCH is required to be broadcast to the entire coverage of the base station (cell). The PCH is mapped to physical resources such as the physical downlink shared channel (PDSCH) that can be used dynamically for traffic.

The multicast channel (MCH) is used for broadcasting to the entire coverage of the base station (cell). The MCH supports SFN combining of multimedia broadcast multicast service (MBMS) services (MTCH and MCCH) in multi-cell transmission. The MCH supports semi-static resource allocation. The MCH is mapped to the PMCH.

Retransmission control according to a hybrid ARQ (HARQ) is applied to an uplink shared channel (UL-SCH) among the uplink transport channels. The UL-SCH supports dynamic or semi-static resource allocation. The UL-SCH is mapped to the physical uplink shared channel (PUSCH).

A random access channel (RACH) is limited to control information. The RACH involves a collision risk. The RACH is mapped to the physical random access channel (PRACH).

The HARQ is described. The HARQ is the technique for improving the communication quality of a channel by combination of automatic repeat request (ARQ) and error correction (forward error correction). The HARQ is advantageous in that error correction functions effectively by retransmission even for a channel whose communication quality changes. In particular, it is also possible to achieve further quality improvement in retransmission through combination of the reception results of the first transmission and the reception results of the retransmission.

An example of the retransmission method is described. If the receiver fails to successfully decode the received data, in other words, if a cyclic redundancy check (CRC) error occurs (CRC = NG), the receiver transmits "Nack" to the transmitter. The transmitter that has received "Nack" retransmits the data. If the receiver successfully decodes the received data, in other words, if a CRC error does not occur (CRC = OK), the receiver transmits "Ack" to the transmitter. The transmitter that has received "Ack" transmits the next data.

The logical channels described in Non-Patent Document 1 (Chapter 6) are described. A broadcast control channel (BCCH) is a downlink channel for broadcast system control information. The BCCH that is a logical channel is mapped to the broadcast channel (BCH) or downlink shared channel (DL-SCH) that is a transport channel.

A paging control channel (PCCH) is a downlink channel for transmitting paging information and system information change notifications. The PCCH is used when the network does not know the cell location of a communication terminal. The PCCH that is a logical channel is mapped to the paging channel (PCH) that is a transport channel.

A common control channel (CCCH) is a channel for transmission control information between communication terminals and a base station. The CCCH is used in a case where the communication terminals have no RRC connection with the network. In the downlink direction, the CCCH is mapped to the downlink shared channel (DL-SCH) that is a transport channel. In the uplink direction, the CCCH is mapped to the uplink shared channel (UL-SCH) that is a transport channel.

A multicast control channel (MCCH) is a downlink channel for point-to-multipoint transmission. The MCCH is used for transmission of MBMS control information for one or several MTCHs from a network to a communication terminal. The MCCH is used only by a communication terminal during reception of the MBMS. The MCCH is mapped to the multicast channel (MCH) that is a transport channel.

A dedicated control channel (DCCH) is a channel that transmits dedicated control information between a communication terminal and a network on a point-to-point basis. The DCCH is used when the communication terminal has an RRC connection. The DCCH is mapped to the uplink shared channel (UL-SCH) in uplink and mapped to the downlink shared channel (DL-SCH) in downlink.

A dedicated traffic channel (DTCH) is a point-to-point communication channel for transmission of user information to a dedicated communication terminal. The DTCH exists in uplink as well as downlink. The DTCH is mapped to the uplink shared channel (UL-SCH) in uplink and mapped to the downlink shared channel (DL-SCH) in downlink.

A multicast traffic channel (MTCH) is a downlink channel for traffic data transmission from a network to a communication terminal. The MTCH is a channel used only by a communication terminal during reception of the MBMS. The MTCH is mapped to the multicast channel (MCH).

CGI represents a cell global identifier. ECGI represents an E-UTRAN cell global identifier. A closed subscriber group (CSG) cell is introduced into the LTE, and the long term evolution advanced (LTE-A) and universal mobile telecommunication system (UMTS) described below.

The closed subscriber group (CSG) cell is a cell in which subscribers who are allowed to use are specified by an operator (hereinafter, also referred to as a "cell for specific subscribers"). The specified subscribers are allowed to access one or more cells of a public land mobile network (PLMN). One or more cells to which the specified subscribers are allowed access are referred to as "CSG cell(s)". Note that access is limited in the PLMN.

The CSG cell is part of the PLMN that broadcasts a specific CSG identity (CSG ID) and broadcasts "TRUE" in a CSG indication. The authorized members of the subscriber group who have registered in advance access the CSG cells using the CSG ID that is the access permission information.

The CSG ID is broadcast by the CSG cell or cells. A plurality of CSG IDs exist in the LTE communication system. The CSG IDs are used by communication terminals (UEs) for making access from CSG-related members easier.

The locations of communication terminals are tracked based on an area composed of one or more cells. The locations are tracked for enabling tracking the locations of communication terminals and calling communication terminals, in other words, incoming calling to communication terminals even in an idle state. An area for tracking locations of communication terminals is referred to as a tracking area.

In 3GPP, base stations referred to as Home-NodeB (Home-NB; HNB) and Home-eNodeB (Home-eNB; HeNB) are studied. HNB/HeNB is a base station for, for example, household, corporation, or commercial access service in UTRAN/E-UTRAN. Non-Patent Document 2 discloses three different modes of the access to the HeNB and HNB. Specifically, an open access mode, a closed access mode, and a hybrid access mode are disclosed.

Further, specifications of long term evolution advanced (LTE-A) are pursued as Release 10 in 3GPP (see Non-Patent Documents 3 and 4). The LTE-A is based on the LTE radio communication system and is configured by adding several new techniques to the system.

Carrier aggregation (CA) is studied for the LTE-A system in which two or more component carriers (CCs) are aggregated to support wider transmission bandwidths up to 100 MHz. Non-Patent Document 1 describes the CA.

In a case where CA is configured, a UE has a single RRC connection with a network (NW). In RRC connection, one serving cell provides NAS mobility information and security input. This cell is referred to as a primary cell (PCell). In downlink, a carrier corresponding to PCell is a downlink primary component carrier (DL PCC). In uplink, a carrier corresponding to PCell is an uplink primary component carrier (UL PCC).

A secondary cell (SCell) is configured to form a serving cell group with a PCell, in accordance with the UE capability. In downlink, a carrier corresponding to SCell is a downlink secondary component carrier (DL SCC). In uplink, a carrier corresponding to SCell is an uplink secondary component carrier (UL SCC).

A serving cell group of one PCell and one or more SCells is configured for one UE.

The new techniques in the LTE-A include the technique of supporting wider bands (wider bandwidth extension) and the coordinated multiple point transmission and reception (CoMP) technique. The CoMP studied for LTE-A in 3GPP is described in Non-Patent Document 1.

The traffic flow of a mobile network is on the rise, and the communication rate is also increasing. It is expected that the communication rate is further increased when the operations of the LTE and the LTE-A are fully initiated.

Furthermore, the use of small eNBs (hereinafter also referred to as "small-scale base station devices") configuring small cells is studied in 3GPP to satisfy tremendous traffic in the future. In an example technique under study, a large number of small eNBs is installed to configure a large number of small cells, which increases spectral efficiency and communication capacity. The specific techniques include dual connectivity (abbreviated as DC) with which a UE communicates with two eNBs through connection thereto. Non-Patent Document 1 describes the DC.

For eNBs that perform dual connectivity (DC), one may be referred to as a master eNB (abbreviated as MeNB), and the other may be referred to as a secondary eNB (abbreviated as SeNB).

For increasingly enhanced mobile communications, the fifth generation (hereinafter also referred to as "5G") radio access system is studied whose service is aimed to be launched in 2020 and afterward. For example, in the Europe, an organization named METIS summarizes the requirements for 5G (see Non-Patent Document 5).

For the requirements in the 5G radio access system show that a system capacity shall be 1000 times as high as, a data transmission rate shall be 100 times as high as, a data latency shall be one tenth (1/10) as low as, and simultaneously connected communication terminals 100 times as many as those of the LTE system, to further reduce the power consumption and device cost.

To satisfy such requirements, increasing the transmission capacity of data using broadband frequencies, and increasing the transmission rate of data through increase in the spectral efficiency are being studied. To realize these, the techniques enabling the spatial multiplexing such as the Multiple Input Multiple Output (MIMO) and the beamforming using a multi-element antenna are being studied.

The MIMO is continuously studied also in LTE-A. From Release 13, full dimension (FD)-MIMO is studied as the extension of the MIMO, which uses two-dimensional antenna array. Non-Patent Document 7 describes the FD-MIMO.

It is studied that the 5G radio access system will be installed concurrently with the LTE system in the initial period of the launch of its service, which is scheduled in 2020. The following configuration is considered. Specifically, an LTE base station and a 5G base station are connected in a DC configuration, and the LTE base station is regarded as an MeNB and the 5G base station as an SeNB. C-plane data is processed in the LTE base station having a large cell range, and U-plane is processed in the LTE base station and the 5G base station.

Further, the following configuration has been studied. That is, the 5G base station is equipped with a multi-element antenna to form beams, such that spatial separation is enhanced to thereby increase channel capacity. Further, the following configuration has been considered. That is, the terminal is also equipped with a multi-element antenna to form beams, such that channel capacity is further increased than when beams are formed only by the base station. Non-Patent Document 8 describes one example this configuration.

### Prior Art Documents

### Non-Patent Documents

Non-Patent Document 1: 3GPP TS36.300 V13.0.0
Non-Patent Document 2: 3GPP S1-083461
Non-Patent Document 3: 3GPP TR 36.814 V9.0.0
Non-Patent Document 4: 3GPP TR 36.912 V10.0.0
Non-Patent Document 5: "Scenarios, requirements and KPIs for 5G mobile and wireless system", ICT-317669-METIS/D1.1
Non-Patent Document 6: 3GPP TS36.211 V13.0.0
Non-Patent Document 7: 3GPP TR36.897 V13.0.0
Non-Patent Document 8: 3GPP Contribution R2-162251

### Summary

### Problem to be Solved by the Invention

When the 5G system is introduced and beamforming is applied to both the base station and the terminal, channel capacity can be increased as compared to the conventional system. Meanwhile, when the base station and the terminal cannot select an optimal beam, a state in which a desired received signal cannot be obtained may occur, or a state in which interference with another terminal is increased may occur. Thus, channel capacity may be reduced undesirably. Further, reduction in channel capacity due to the use of a radio resource that is used for a control message or the like for beam selection of the base station and the terminal is considered.

To solve the problem described above, the present invention has an object to provide a technology of reducing a control overhead concerning beam selection of a base station and a terminal without reducing accuracy of the beam selection.

### Means to Solve the Problem

A communication system according to the present invention includes a base station device, and at least one terminal device configured to be connected to the base station device so as to perform radio communication with the base station device. The base station device is configured to control a plurality of base station beams having different beam directions. The base station device transmits a reference signal through a corresponding base station beam. The reference signal is specific to each of the plurality of base station beams used by the at least one terminal device to measure reception quality of a signal from the base station device.

The at least one terminal device notifies the base station device of terminal beam related information. The terminal beam related information concerns at least one terminal beam formed by the at least one terminal device. The base station device controls transmission of the reference signal through the plurality of base station beams, based on the terminal beam related information.

### Effects of the Invention

According to the present invention, a control overhead concerning beam selection of the base station and the terminal can be reduced without reducing accuracy of the beam selection.

These and other objects, features, aspects and advantages of the present invention will become more apparent from the following detailed description of the present invention when taken in conjunction with the accompanying drawings.

### Brief Description of Drawings

- FIG. 1: is a diagram illustrating the configuration of a radio frame for use in an LTE communication system.
- FIG. 2: is a block diagram showing the overall configuration of an LTE communication system 200 under discussion of 3GPP.
- FIG. 3: is a block diagram showing the configuration of a user equipment 202 shown in FIG. 2, which is a communication terminal according to the present invention.
- FIG. 4: is a block diagram showing the configuration of a base station 203 shown in FIG. 2, which is a base station according to the present invention.
- FIG. 5: is a block diagram showing the configuration of an MME according to the present invention.
- FIG. 6: is a flowchart showing an outline from a cell search to an idle state operation performed by a communication terminal (UE) in the LTE communication system.
- FIG. 7: is an overall configuration diagram illustrating a system including an MeNB base station of a macro cell, an SeNB base station of a small cell, and a stand-alone base station, according to a first embodiment of the present invention.
- FIG. 8: is a configuration diagram of a system in which the base station is equipped with a multi-element antenna to form base station beams, according to the first embodiment of the present invention.
- FIG. 9: is a configuration diagram of a system in which the base station and the terminal are equipped with a multi-element antenna to form base station beams and terminal beams, respectively, according to the first embodiment of the present invention.
- FIG. 10: is a diagram illustrating an example in which, when the number of array antennas of the base station is smaller than the number of beams in a system in which only the base station forms beams, BRSs are transmitted for all the beams in a plurality of times.
- FIG. 11: is a diagram illustrating time required to measure reception quality of each combination of the base station beams and the terminal beams, in a system in which the base station and the terminal perform beamforming.
- FIG. 12: is a diagram illustrating operation in which the BRSs as many as the number of terminal beams are repeatedly transmitted in every BRS transmission cycle, in the system in which the base station and the terminal perform beamforming.
- FIG. 13: is a sequence diagram when the number of times of repetition of the BRS transmission of the base station is dynamically changed according to the number of terminal beams supported by terminals present in a service area, according to the first embodiment of the present invention.
- FIG. 14: is a diagram illustrating operation in which the number of times of repetition of the BRS transmission of the base station is dynamically changed according to the number of terminal beams supported by the terminals present in the service area, according to the first embodiment of the present invention.
- FIG. 15: is a sequence diagram when the number of times of repetition of the BRS transmission of the base station is dynamically changed according to the number of terminal beams and beam selection capability supported by the terminals present in the service area, according to a first modification of the first embodiment of the present invention.
- FIG. 16: is a diagram illustrating operation in which the number of times of repetition of the BRS transmission of the base station is dynamically changed according to the number of terminal beams and the beam selection capability supported by the terminals present in the service area, according to the first modification of the first embodiment of the present invention.
- FIG. 17: is a sequence diagram when the number of times of repetition of the BRS transmission of the base station is dynamically changed according to the number of terminal beams and the beam selection capability supported by the terminals present in the service area in a case where a stand-alone 5G base station is deployed as an MeNB base station, according to a fourth modification of the first embodiment of the present invention.
- FIG. 18: is a sequence diagram illustrating a procedure when the terminal performs handover, according to a fifth modification of the first embodiment of the present invention.
- FIG. 19: is the sequence diagram illustrating a procedure when the terminal performs handover, according to the fifth modification of the first embodiment of the present invention.
- FIG. 20: is a sequence diagram when the number of times of repetition of the BRS transmission of the base station is dynamically changed according to a beam selection state of the terminals, according to a second embodiment of the present invention.
- FIG. 21: is the sequence diagram when the number of times of repetition of the BRS transmission of the base station is dynamically changed according to the beam selection state of the terminals, according to the second embodiment of the present invention.
- FIG. 22: is a sequence diagram when the number of times of repetition of the BRS transmission and BRS transmission beams of the base station are dynamically changed according to the beam selection state of the terminals and a selected beam, according to a first modification of the second embodiment of the present invention.
- FIG. 23: is the sequence diagram when the number of times of repetition of the BRS transmission and the BRS transmission beams of the base station are dynamically changed according to the beam selection state of the terminals and the selected beam, according to the first modification of the second embodiment of the present invention.
- FIG. 24: is a diagram illustrating the BRS transmission beams when the BRS transmission beams of the base station are dynamically switched according to the beam selection state of the terminals and the selected beam, according to the first modification of the second embodiment of the present invention.
- FIG. 25: is a sequence diagram when the number of times of repetition of the BRS transmission and the BRS transmission beams of the base station are dynamically changed also according to a BRS transmission request from the terminals in addition to the beam selection state of the terminals and the selected beam, according to a second modification of the second embodiment of the present invention.
- FIG. 26: is the sequence diagram when the number of times of repetition of the BRS transmission and the BRS transmission beams of the base station are dynamically changed also according to the BRS transmission request from the terminals in addition to the beam selection state of the terminals and the selected beam, according to the second modification of the second embodiment of the present invention.
- FIG. 27: is the sequence diagram when the number of times of repetition of the BRS transmission and the BRS transmission beams of the base station are dynamically changed also according to the BRS transmission request from the terminals in addition to the beam selection state of the terminals and the selected beam, according to the second modification of the second embodiment of the present invention.
- FIG. 28: is a sequence diagram when a measurement report is used for notification of terminal information in a DC configuration, according to a third embodiment of the present invention.
- FIG. 29: is a diagram illustrating an example of a BRS transmission time period when the BRS transmission cycle is dynamically switched according to a movement speed of the terminal, according to the third embodiment of the present invention (at the time of low-speed movement).
- FIG. 30: is a diagram illustrating an example of the BRS transmission time period when the BRS transmission cycle is dynamically switched according to a movement speed of the terminal, according to the third embodiment of the present invention (at the time of high-speed movement).
- FIG. 31: is a sequence diagram when a RACH is used for notification of the terminal information in the DC configuration, according to a first modification of the third embodiment of the present invention.
- FIG. 32: is a sequence diagram when the RACH is used for notification of the terminal information in a stand-alone configuration, according to a second modification of the third embodiment of the present invention.
- FIG. 33: is a sequence diagram when a cycle and time of beam selection is changed during communication, according to a third modification of the third embodiment of the present invention.
- FIG. 34: is a diagram illustrating an example of a beam selection method of the terminal in a mode in which the best beam of the terminal is selected only by the terminal, according to a fourth embodiment of the present invention.
- FIG. 35: is a sequence diagram illustrating a procedure when dynamic BRS beam selection operation is ON in a configuration provided with the mode in which the best beam of the terminal is selected only by the terminal, according to the fourth embodiment of the present invention.
- FIG. 36: is a sequence diagram illustrating a procedure when dynamic BRS beam selection operation is OFF in a configuration provided with the mode in which the best beam of the terminal is selected only by the terminal, according to the fourth embodiment of the present invention.
- FIG. 37: is a diagram illustrating a dynamic change of a beam scanning time period according to the movement speed of the terminal in the mode in which the best beam of the terminal is selected only by the terminal, according to the fourth embodiment of the present invention.
- FIG. 38: is the diagram illustrating a dynamic change of a beam scanning time period according to the movement speed of the terminal in the mode in which the best beam of the terminal is selected only by the terminal, according to the fourth embodiment of the present invention.
- FIG. 39: is a sequence diagram enabling establishment of communication even when the terminal does not support beam control, according to a fifth embodiment of the present invention.
- FIG. 40: is a diagram illustrating that, when a beam control unsupported terminal and a beam control supported terminal coexist in the beam control, a beam control supported period and a beam control unsupported period are provided through time division, frequency division, or both the time division and the frequency division, according to the fifth embodiment of the present invention.
- FIG. 41: is a sequence diagram when the terminal selects beam use/non-use for each piece of data to be communicated, according to a first modification of the fifth embodiment of the present invention.

### Description of Embodiments

### First Embodiment

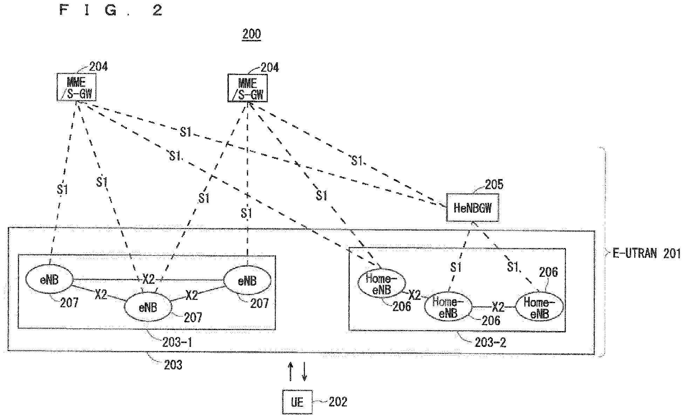

FIG. 2 is a block diagram showing an overall configuration of an LTE communication system 200 which is under discussion of 3GPP. FIG. 2 is described. A radio access network is referred to as an evolved universal terrestrial radio access network (E-UTRAN) 201. A user equipment device (hereinafter, referred to as a "user equipment (UE)") 202 that is a communication terminal device is capable of radio communication with a base station device (hereinafter, referred to as a "base station (E-UTRAN Node B: eNB)") 203 and transmits and receives signals through radio communication.

Here, the "communication terminal device" covers not only a user equipment device such as a movable mobile phone terminal device, but also an unmovable device such as a sensor. In the following description, the "communication terminal device" may be simply referred to as a "communication terminal".

The E-UTRAN is composed of one or a plurality of base stations 203, provided that a control protocol for the user equipment 202 such as a radio resource control (RRC), and user planes such as a packet data convergence protocol (PDCP), radio link control (RLC), medium access control (MAC), or physical layer (PHY) are terminated in the base station 203.

The control protocol radio resource control (RRC) between the user equipment 202 and the base station 203 performs broadcast, paging, RRC connection management, and the like. The states of the base station 203 and the user equipment 202 in RRC are classified into RRC_IDLE and RRC_CONNECTED.

In RRC_IDLE, public land mobile network (PLMN) selection, system information (SI) broadcast, paging, cell re-selection, mobility, and the like are performed. In RRC _CONNECTED, the user equipment has RRC connection and is capable of transmitting and receiving data to and from a network. In RRC_CONNECTED, for example, handover (HO) and measurement of a neighbor cell are performed.

The base stations 203 are classified into eNBs 207 and Home-eNBs 206. The communication system 200 includes an eNB group 203-1 including a plurality of eNBs 207 and a Home-eNB group 203-2 including a plurality of Home-eNBs 206. A system, composed of an evolved packet core (EPC) being a core network and an E-UTRAN 201 being a radio access network, is referred to as an evolved packet system (EPS). The EPC being a core network and the E-UTRAN 201 being a radio access network may be collectively referred to as a "network".

The eNB 207 is connected to an MME/S-GW unit (hereinafter, also referred to as an "MME unit") 204 including a mobility management entity (MME), a serving gateway (S-GW), or an MME and an S-GW by means of an S1 interface, and control information is communicated between the eNB 207 and the MME unit 204. A plurality of MME units 204 may be connected to one eNB 207. The eNBs 207 are connected to each other by means of an X2 interface, and control information is communicated between the eNBs 207.

The Home-eNB 206 is connected to the MME unit 204 by means of an S1 interface, and control information is communicated between the Home-eNB 206 and the MME unit 204. A plurality of Home-eNBs 206 are connected to one MME unit 204. Or, the Home-eNBs 206 are connected to the MME units 204 through a Home-eNB gateway (HeNBGW) 205. The Home-eNB 206 is connected to the HeNBGW 205 by means of an S1 interface, and the HeNBGW 205 is connected to the MME unit 204 by means of an S1 interface.

One or a plurality of Home-eNBs 206 are connected to one HeNBGW 205, and information is communicated therebetween through an S1 interface. The HeNBGW 205 is connected to one or a plurality of MME units 204, and information is communicated therebetween through an S1 interface.

The MME units 204 and HeNBGW 205 are entities of higher layer, specifically, higher nodes, and control the connections between the user equipment (UE) 202 and the eNB 207 and the Home-eNB 206 being base stations. The MME units 204 configure an EPC being a core network. The base station 203 and the HeNBGW 205 configure the E-UTRAN 201.

Further, the configuration is studied in 3GPP. The X2 interface between the Home-eNBs 206 is supported. In other words, the Home-eNBs 206 are connected to each other by means of an X2 interface, and control information is communicated between the Home-eNBs 206. The HeNBGW 205 appears to the MME unit 204 as the Home-eNB 206. The HeNBGW 205 appears to the Home-eNB 206 as the MME unit 204.

The interfaces between the Home-eNBs 206 and the MME units 204 are the same, which are the S1 interfaces, in both cases where the Home-eNB 206 is connected to the MME unit 204 through the HeNBGW 205 and it is directly connected to the MME unit 204.

The base station 203 may configure a single cell or a plurality of cells. Each cell has a range predetermined as a coverage in which the cell can communicate with the user equipment 202 and performs radio communication with the user equipment 202 within the coverage. In a case where one base station 203 configures a plurality of cells, every cell is configured so as to communicate with the user equipment 202.

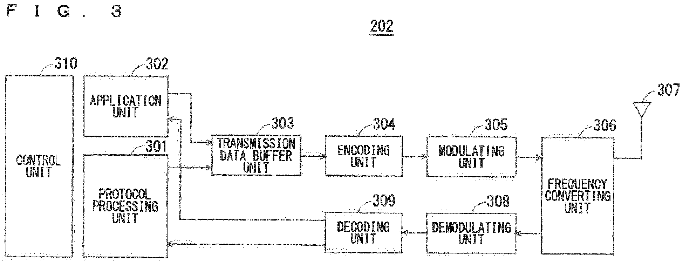

FIG. 3 is a block diagram showing the configuration of the user equipment 202 of FIG. 2 that is a communication terminal according to the present invention. The transmission process of the user equipment 202 shown in FIG. 3 is described. First, a transmission data buffer unit 303 stores the control data from a protocol processing unit 301 and the user data from an application unit 302. The data stored in the transmission data buffer unit 303 is passed to an encoding unit 304, and is subject to an encoding process such as error correction.

There may exist the data output from the transmission data buffer unit 303 directly to a modulating unit 305 without the encoding process. The data encoded by the encoding unit 304 is modulated by the modulating unit 305. The modulated data is converted into a baseband signal, and the baseband signal is output to a frequency converting unit 306 and is then converted into a radio transmission frequency. After that, a transmission signal is transmitted from an antenna 307 to the base station 203.

The user equipment 202 executes the reception process as follows. The radio signal from the base station 203 is received through the antenna 307. The received signal is converted from a radio reception frequency into a baseband signal by the frequency converting unit 306 and is then demodulated by a demodulating unit 308. The demodulated data is passed to a decoding unit 309, and is subject to a decoding process such as error correction.

Among the pieces of decoded data, the control data is passed to the protocol processing unit 301, and the user data is passed to the application unit 302. A series of processes by the user equipment 202 is controlled by a control unit 310. This means that, though not shown in FIG. 3, the control unit 310 is connected to the individual units 301 to 309.

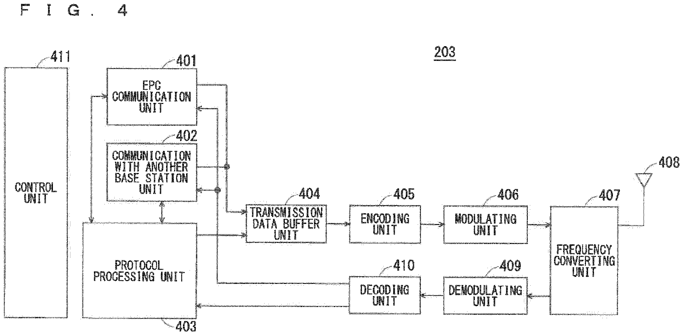

FIG. 4 is a block diagram showing the configuration of the base station 203 of FIG. 2 that is a base station according to the present invention. The transmission process of the base station 203 shown in FIG. 4 is described. An EPC communication unit 401 performs data transmission and reception between the base station 203 and the EPC (such as the MME unit 204), HeNBGW 205, and the like.

A communication with another base station unit 402 performs data transmission and reception to and from another base station. The EPC communication unit 401 and the communication with another base station unit 402 each transmit and receive information to and from a protocol processing unit 403. The control data from the protocol processing unit 403, and the user data and the control data from the EPC communication unit 401 and the communication with another base station unit 402 are stored in a transmission data buffer unit 404.

The data stored in the transmission data buffer unit 404 is passed to an encoding unit 405, and then an encoding process such as error correction is performed for the data. There may exist the data output from the transmission data buffer unit 404 directly to a modulating unit 406 without the encoding process. The encoded data is modulated by the modulating unit 406. The modulated data is converted into a baseband signal, and the baseband signal is output to a frequency converting unit 407 and is then converted into a radio transmission frequency. After that, a transmission signal is transmitted from an antenna 408 to one or a plurality of user equipments 202.

The reception process of the base station 203 is executed as follows. A radio signal from one or a plurality of user equipments 202 is received through the antenna 408. The received signal is converted from a radio reception frequency into a baseband signal by the frequency converting unit 407, and is then demodulated by a demodulating unit 409. The demodulated data is passed to a decoding unit 410 and then subject to a decoding process such as error correction.

Among the pieces of decoded data, the control data is passed to the protocol processing unit 403, the EPC communication unit 401, or the communication with another base station unit 402, and the user data is passed to the EPC communication unit 401 and the communication with another base station unit 402. A series of processes by the base station 203 is controlled by a control unit 411. This means that, though not shown in FIG. 4, the control unit 411 is connected to the individual units 401 to 410.

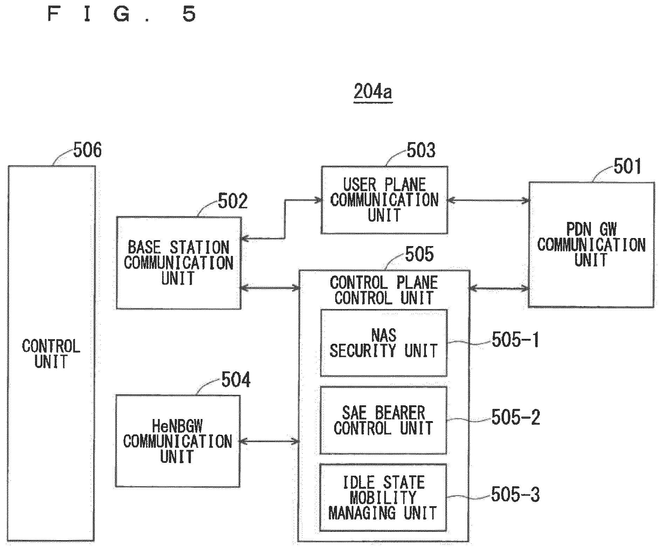

FIG. 5 is a block diagram showing the configuration of the MME according to the present invention. FIG. 5 shows the configuration of an MME 204a included in the MME unit 204 shown in FIG. 2 described above. A PDN GW communication unit 501 performs data transmission and reception between the MME 204a and the PDN GW. A base station communication unit 502 performs data transmission and reception between the MME 204a and the base station 203 by means of the S1 interface.

In a case where the data received from the PDN GW is user data, the user data is passed from the PDN GW communication unit 501 to the base station communication unit 502 via a user plane communication unit 503 and is then transmitted to one or a plurality of base stations 203. In a case where the data received from the base station 203 is user data, the user data is passed from the base station communication unit 502 to the PDN GW communication unit 501 via the user plane communication unit 503 and is then transmitted to the PDN GW.

In a case where the data received from the PDN GW is control data, the control data is passed from the PDN GW communication unit 501 to a control plane control unit 505. In a case where the data received from the base station 203 is control data, the control data is passed from the base station communication unit 502 to the control plane control unit 505.

A HeNBGW communication unit 504 is provided in a case where the HeNBGW 205 is provided, which performs data transmission and reception between the MME 204a and the HeNBGW 205 by means of the interface (IF) according to an information type. The control data received from the HeNBGW communication unit 504 is passed from the HeNBGW communication unit 504 to the control plane control unit 505.

The processing results of the control plane control unit 505 are transmitted to the PDN GW via the PDN GW communication unit 501. The processing results of the control plane control unit 505 are transmitted to one or a plurality of base stations 203 by means of the S1 interface via the base station communication unit 502, and are transmitted to one or a plurality of HeNBGWs 205 via the HeNBGW communication unit 504.

The control plane control unit 505 includes a NAS security unit 505-1, an SAE bearer control unit 505-2, and an idle state mobility managing unit 505-3, and performs an overall process for the control plane. The NAS security unit 505-1 provides, for example, security of a non-access stratum (NAS) message. The SAE bearer control unit 505-2 manages, for example, a system architecture evolution (SAE) bearer.

The idle state mobility managing unit 505-3 performs, for example, mobility management of an idle state (LTE-IDLE state which is merely referred to as idle as well), generation and control of a paging signal in the idle state, addition, deletion, update, and search of a tracking area of one or a plurality of user equipments 202 being served thereby, and tracking area list management.

The MME 204a distributes a paging signal to one or a plurality of base stations 203. In addition, the MME 204a performs mobility control of an idle state. When the user equipment is in the idle state and an active state, the MME 204a manages a list of tracking areas. The MME 204a begins a paging protocol by transmitting a paging message to the cell belonging to a tracking area in which the UE is registered. The idle state mobility managing unit 505-3 may manage the CSG of the Home-eNBs 206 to be connected to the MME 204a, CSG IDs, and a whitelist.

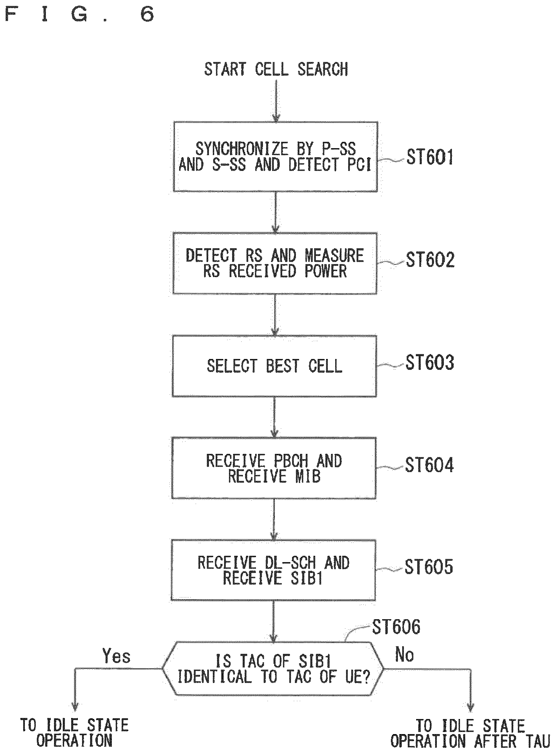

An example of a cell search method in a mobile communication system is described next. FIG. 6 is a flowchart showing an outline from a cell search to an idle state operation performed by a communication terminal (UE) in the LTE communication system. When starting a cell search, in Step ST601, the communication terminal synchronizes slot timing and frame timing by a primary synchronization signal (P-SS) and a secondary synchronization signal (S-SS) transmitted from a neighbor base station.

The P-SS and S-SS are collectively referred to as a synchronization signal (SS). Synchronization codes, which correspond one-to-one to PCIs assigned per cell, are assigned to the synchronization signals (SSs). The number of PCIs is currently studied in 504 ways. The 504 ways of PCIs are used for synchronization, and the PCIs of the synchronized cells are detected (specified).

In Step ST602, next, the user equipment detects a cell-specific reference signal (CRS) being a reference signal (RS) transmitted from the base station per cell and measures the reference signal received power (RSRP). The codes corresponding one-to-one to the PCIs are used for the reference signal RS. Separation from another cell is enabled by correlation using the code. The code for RS of the cell is derived from the PCI specified in Step ST601, so that the RS can be detected and the RS received power can be measured.

In Step ST603, next, the user equipment selects the cell having the best RS received quality, for example, the cell having the highest RS received power, that is, the best cell, from one or more cells that have been detected up to Step ST602.

In Step ST604, next, the user equipment receives the PBCH of the best cell and obtains the BCCH that is the broadcast information. A master information block (MIB) containing the cell configuration information is mapped to the BCCH over the PBCH. Accordingly, the MIB is obtained by obtaining the BCCH through reception of the PBCH. Examples of the MIB information include the downlink (DL) system bandwidth (also referred to as a transmission bandwidth configuration (dl-bandwidth)), the number of transmission antennas, and a system frame number (SFN).

In Step ST605, next, the user equipment receives the DL-SCH of the cell based on the cell configuration information of the MIB, to thereby obtain a system information block (SIB) 1 of the broadcast information BCCH. The SIB1 contains the information about the access to the cell, information about cell selection, and scheduling information on another SIB (SIBk; k is an integer equal to or greater than two). In addition, the SIB1 contains a tracking area code (TAC).

In Step ST606, next, the communication terminal compares the TAC of the SIB1 received in Step ST605 with the TAC portion of a tracking area identity (TAI) in the tracking area list that has already been possessed by the communication terminal. The tracking area list is also referred to as a TAI list. TAI is the identification information for identifying tracking areas and is composed of a mobile country code (MCC), a mobile network code (MNC), and a tracking area code (TAC). MCC is a country code. MNC is a network code. TAC is the code number of a tracking area.

If the result of the comparison of Step ST606 shows that the TAC received in Step ST605 is identical to the TAC included in the tracking area list, the user equipment enters an idle state operation in the cell. If the comparison shows that the TAC received in Step ST605 is not included in the tracking area list, the communication terminal requires a core network (EPC) including MME and the like to change a tracking area through the cell for performing tracking area update (TAU).

The device configuring a core network (hereinafter, also referred to as a "core-network-side device") updates the tracking area list based on an identification number (such as UE-ID) of a communication terminal transmitted from the communication terminal together with a TAU request signal. The core-network-side device transmits the updated tracking area list to the communication terminal. The communication terminal rewrites (updates) the TAC list of the communication terminal based on the received tracking area list. After that, the communication terminal enters the idle state operation in the cell.

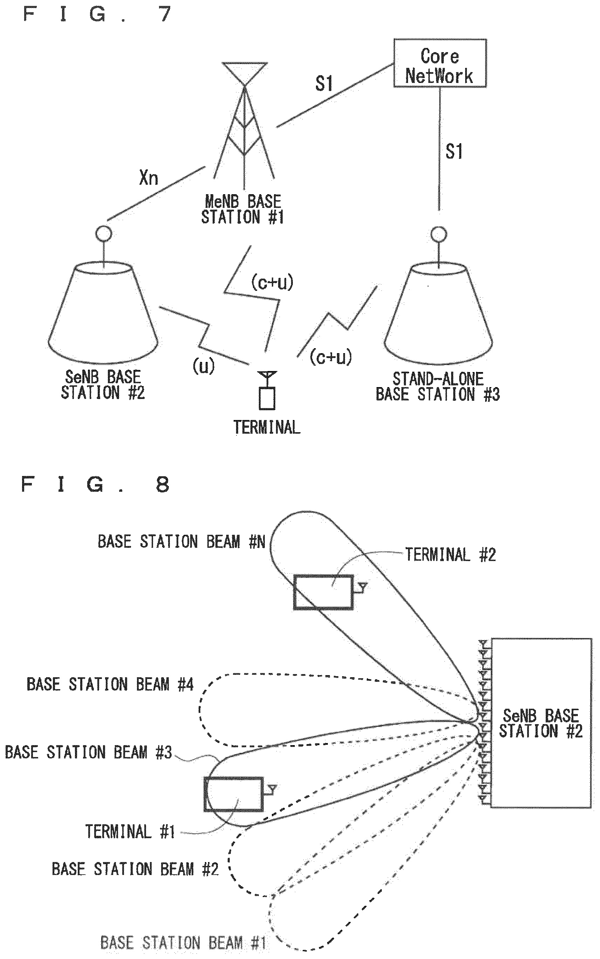

In the 5G radio access system aiming to be commercialized from 2018 to 2020, an architecture in which the 5G base station coexist with the LTE base station is considered. The following configuration has been considered. That is, the LTE base station and the 5G base station are connected in the dual connectivity (DC) configuration. The LTE base station is regarded as the MeNB base station, and the 5G base station is regarded as the SeNB base station. In this manner, C-plane data is processed in the LTE base station having a large cell range, and U-plane is processed in the LTE base station and the 5G base station. Refer to FIG. 7.

The following configuration has been studied. That is, the 5G base station is equipped with a multi-element antenna to form beams, and the beams are directed to a direction in which a terminal device to be communicated with exists, such that spatial separation is enhanced to thereby increase channel capacity. Refer to FIG. 8.

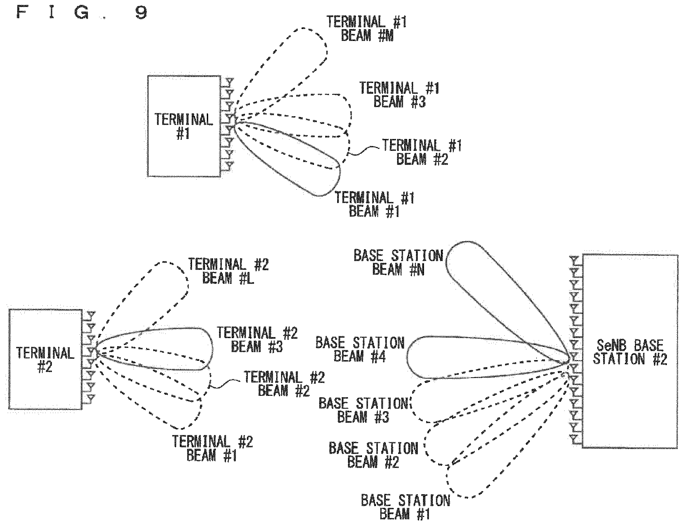

Further, the following configuration has also been considered. That is, in addition to the configuration that the base station forms beams, the terminal is also equipped with a multi-element antenna to form beams, such that channel capacity is further increased. Refer to FIG. 9. Note that a beam formed by the base station may be hereinafter referred to as a "base station beam," and a beam formed by the terminal may be hereinafter referred to as a "terminal beam."

When beams are formed by both the base station and the terminal, an optimal combination of the beams needs to be selected among combinations of beam directions of both the base station and the terminal. When an optimal beam cannot be selected, a state in which a desired received signal cannot be obtained may occur, or a state in which interference with another terminal is increased may occur. Thus, channel capacity may be reduced undesirably. Further, reduction in channel capacity due to the use of a radio resource that is used for a control message or the like for beam selection of the base station and the terminal is considered.

A procedure of selecting a combination of beams of the base station and the terminal will be described in sequence. The base station periodically transmits a downlink reference signal specific to each beam (beam specific RS (BRS)) in all beam directions formed by the base station, such that the terminal can measure reception quality of each base station beam in order for the terminal to select a base station beam appropriate for communication.

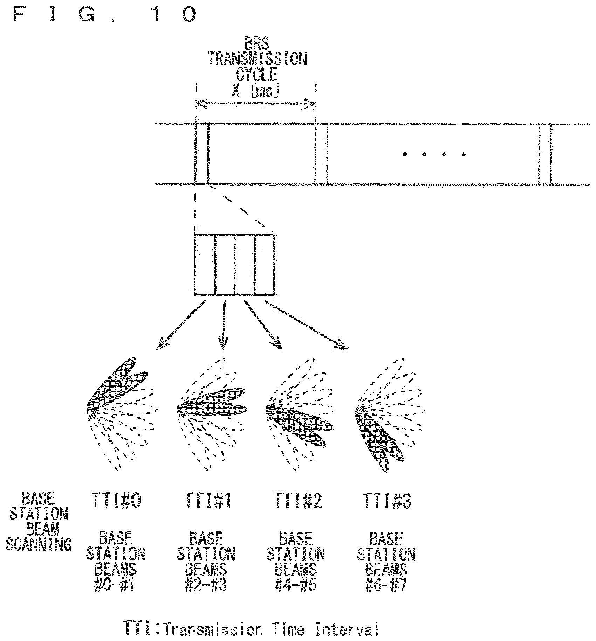

When the number of array antennas of the base station is smaller than the number of beams, the base station transmits the BRSs for all the beams in a plurality of times. FIG. 10 illustrates an example in which the BRSs as many as the number N of all beams are transmitted in four times, in every BRS transmission cycle of X [ms].

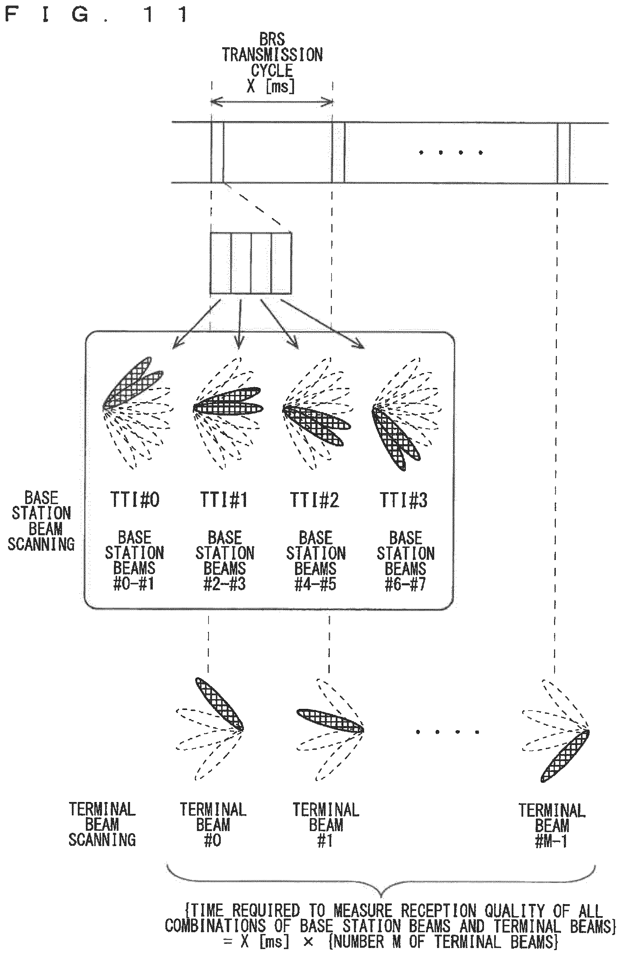

The terminal measures reception quality of the BRS of each beam transmitted from the base station, and selects a base station beam having the best reception quality. In the configuration in which the terminal is also equipped with a multi-element antenna to form beams as illustrated in FIG. 9, the terminal beams are switched to scan the beams in every BRS transmission cycle of the base station beams as illustrated in FIG. 11, in order to perform beam selection among combinations of the base station beams and the terminal beams. Specifically, BRS reception quality of all the combinations of the base station beams and the terminal beams needs to be measured.

Therefore, a time period of {BRS transmission cycles of base station beams} × {Number of terminal beams} is required. For this reason, there is a problem in that, when the terminal is moving, switching of the combinations of the base station beams and the terminal beams may not catch up with the speed of the movement. Thus, a state in which an optimal combination of beams cannot be selected may occur. Further, there is another problem in that such a state may lead to a state in which a desired received signal cannot be obtained, or to a state in which interference with another terminal is increased.

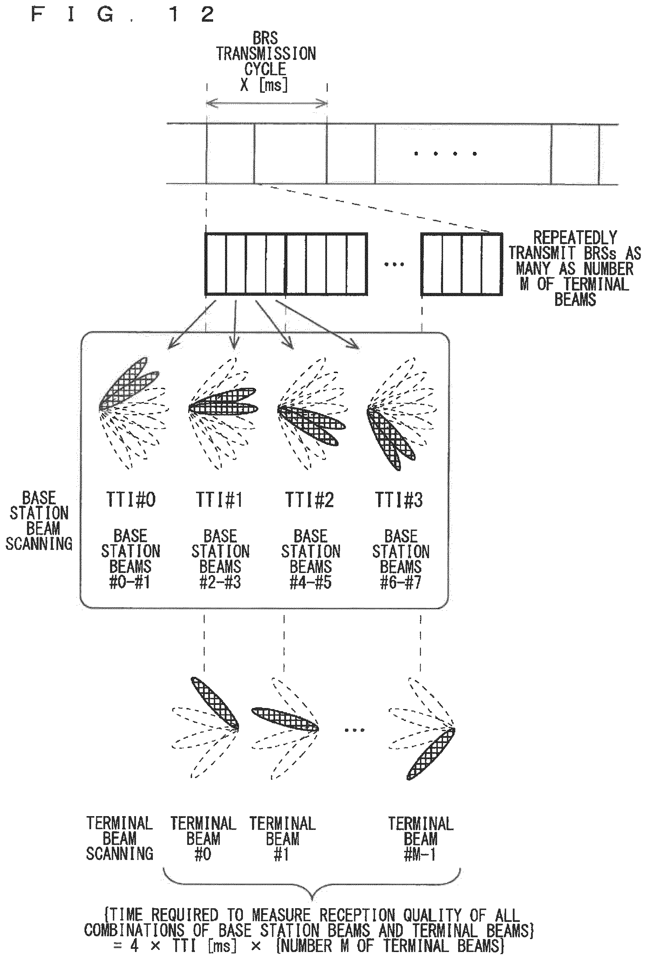

Further, in order to reduce time required to select a combination of the base station beam and the terminal beam, there is also a method in which the BRSs as many as the number of terminal beams are repeatedly transmitted in every BRS transmission cycle of the base station as illustrated in FIG. 12. However, the conventional system does not specify a procedure in which an individual terminal notifies the base station of the number of beams that the individual terminal has.

Therefore, the base station has no other way but to repeatedly transmit the BRSs as many as the largest number of beams on specifications concerning the number of beams of the terminal. For this reason, even when there is no terminal equipped with a multi-element antenna among terminals present in a service area, the BRSs are transmitted. Thus, there is a problem in that a radio resource is consumed wastefully.

For example, in the first embodiment and in first to fifth modifications of the first embodiment described later, the BRS transmission cycle is dynamically changed according to the number of terminal beams supported by the terminals present in a service area.

In the first embodiment, in the system of the DC configuration, the following configuration is provided. That is, a procedure in which terminals present in a service area of the MeNB base station notify the base station of the number of terminal beams supported by each of the terminals as terminal beam related information is specified. The base station knows the number of terminal beams of individual terminals present in the service area of the base station.

Then, the base station performs BRS transmission in accordance with a terminal having the largest number of terminal beams among the terminals present in the service area. With this configuration, when the number of terminal beams of the terminals present in the service area is small, it is only necessary that the BRSs be repeatedly transmitted a number of times necessary for selection of the number of terminal beams of the terminals. Consequently, the radio resource need not be wastefully consumed.

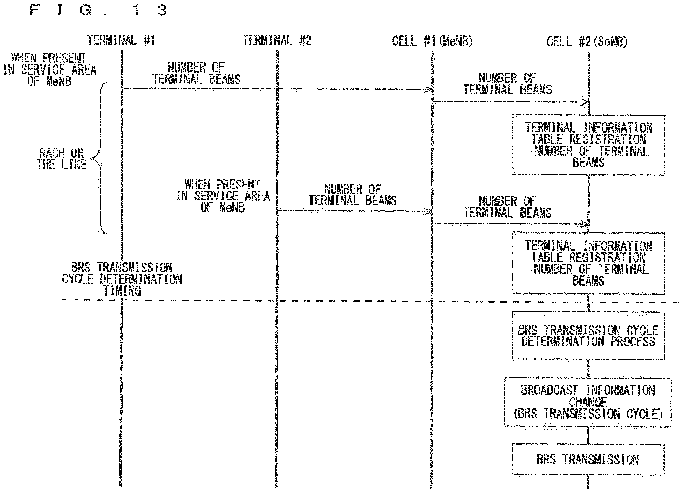

FIG. 13 illustrates an example of the procedure in which the terminal present in a service area notifies the base station of the number of supported terminal beams. According to FIG. 13, a parameter for notifying of the number of terminal beams of the terminal is added to a RACH message or the like, and the terminal thereby notifies the MeNB base station present in the service area of the number of terminal beams.

The MeNB base station notifies the SeNB base station of the number of terminal beams received from the terminal via the X2 interface or the like. The SeNB base station registers the number of terminal beams of the terminal notified from the MeNB base station in a terminal information table that stores terminal information.

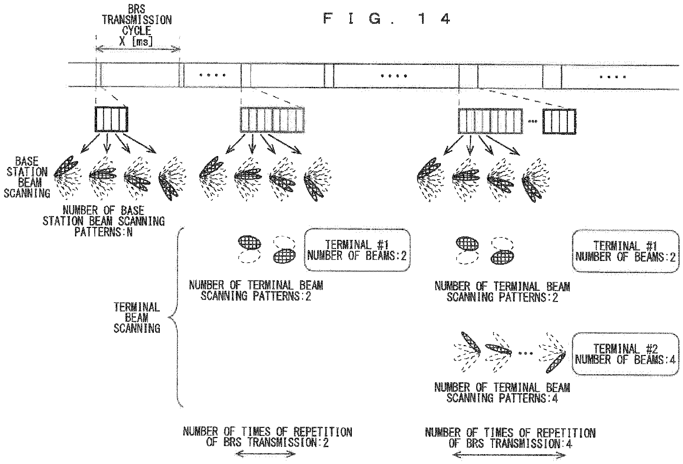

In a BRS transmission cycle determination process periodically performed in accordance with the BRS transmission cycle, the SeNB base station searches for the largest number of terminal beams among the terminals present in the service area. Then, the SeNB base station determines the BRS transmission cycle such that the BRSs as many as the largest number of terminal beams are repeatedly transmitted (i.e., determines details concerning the BRS transmission performed in the BRS transmission cycle). The SeNB base station reflects the determined BRS transmission cycle in the parameter of the broadcast information, and then changes the number of times of repetition of the BRSs transmitted from the SeNB base station as illustrated in FIG. 14.

For example, when the number of terminal beams of a terminal #1 is two, the number of times of BRS transmission necessary for beam selection of the terminal #1 is two. When the number of terminal beams of a terminal #2 is four, the number of times of BRS transmission necessary for beam selection of the terminal #2 is four. Therefore, as illustrated in FIG. 14, when only the terminal #1 is present in the service area, the number of times of BRS transmission suffices to be twice, and the number of times of BRS transmission is increased to four times when the terminal #2 newly enters the service area. In such a manner, the number of times of BRS transmission according to beam selection capability of the terminal can be employed.

According to the first embodiment, the following configuration is provided, for example.

Provided is a communication system including a base station device, and at least one terminal device configured to be connected to the base station device so as to perform radio communication with the base station device. More specifically, the base station device is configured to control a plurality of base station beams having different beam directions. The base station device transmits a reference signal through a corresponding base station beam. The reference signal is specific to each of the plurality of base station beams used by the at least one terminal device to measure reception quality of a signal from the base station device.

The at least one terminal device notifies the base station device of terminal beam related information. The terminal beam related information concerns at least one terminal beam formed by the at least one terminal device. The base station device controls transmission of the reference signal through the plurality of base station beams, based on the terminal beam related information.

Here, the terminal beam related information may include information about a number of the at least one terminal beam formed by the at least one terminal device. In this case, the base station device determines a number of times of transmission of the reference signal through the plurality of base station beams, according to a largest number of the at least one terminal beam.

According to this configuration, the problem described above can be solved, and the effect described above can be obtained.

### First Modification of First Embodiment

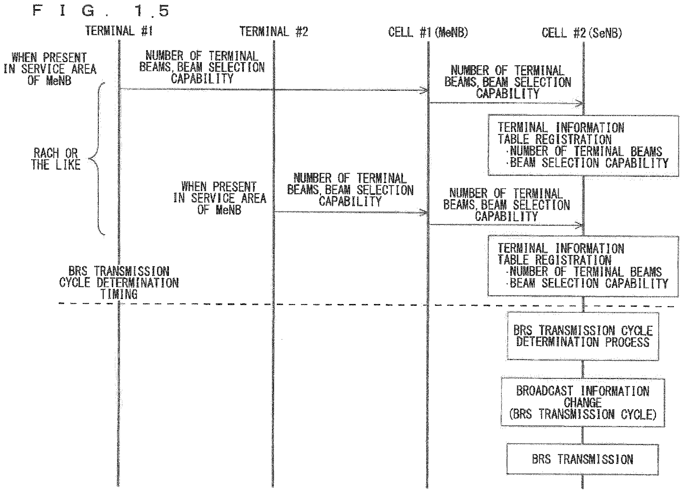

It is considered that some of the terminals supporting formation of the terminal beams can simultaneously receive signals in a plurality of beam directions. Therefore, as illustrated in FIG. 15, a parameter for notifying of the number of terminal beams and beam selection capability (the number of terminal beams that can be simultaneously received) of the terminal is added to a RACH message or the like, and the terminal thereby notifies the SeNB base station of the number of terminal beams and the beam selection capability of the terminal as the terminal beam related information, via the MeNB base station present in the service area.

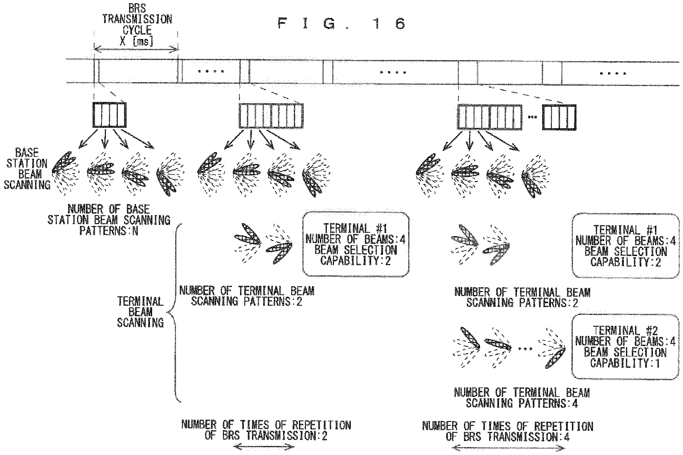

The SeNB base station can obtain the number of times of BRS transmission necessary for searching for the number of terminal beams of each terminal present in the service area, based on the number of terminal beams and the beam selection capability of the terminal notified from the MeNB base station. The SeNB base station determines the number of times of BRS transmission in accordance with the largest number among the numbers of times of BRS transmission necessary for beam selection of each terminal. Then, the SeNB base station changes the number of times of repetition of the BRSs to be transmitted from the SeNB base station as illustrated in FIG. 16, according to the number of terminal beams and the beam selection capability of the terminal present in the service area.

For example, when the number of terminal beams of the terminal #1 is four, and the number of terminal beams that can be simultaneously received is two, the number of times of BRS transmission necessary for beam selection of the terminal #1 is two. When the number of terminal beams of the terminal #2 is four, and the number of terminal beams that can be simultaneously received is one, the number of times of BRS transmission necessary for beam selection of the terminal #2 is four. Therefore, as illustrated in FIG. 16, when only the terminal #1 is present in the service area, the number of times of BRS transmission suffices to be twice, and the number of times of BRS transmission is increased to four times when the terminal #2 newly enters the service area. In such a manner, the number of times of BRS transmission according to the beam selection capability of the terminal can be employed.

### Second Modification of First Embodiment

In the first embodiment and in the first modification of the first embodiment, when terminals are present in the service area of the MeNB base station, the SeNB base station connected under the MeNB base station is notified of the terminal beam related information. Here, the terminal beam related information in the first embodiment is information about the number of terminal beams of the terminal, whereas the terminal beam related information in the first modification of the first embodiment includes information about the number of terminal beams of the terminal and information about beam selection capability of the terminal. In another example, the SeNB base station to be notified of the terminal beam related information may be an SeNB base station installed in a location registration area of the terminal.

In such a case, to notify the MeNB base station and the SeNB base station installed in the location registration area of the terminal beam related information, the S1 interface between the MeNB base station and the core network is also used in addition to the X2 interface between the MeNB base station and the SeNB base station.

### Third Modification of First Embodiment

In the first embodiment and in the first modification of the first embodiment, when terminals are present in the service area of the MeNB base station, the SeNB base station connected under the MeNB base station is notified of the terminal beam related information. Here, the terminal beam related information in the first embodiment is information about the number of terminal beams of the terminal, whereas the terminal beam related information in the first modification of the first embodiment includes information about the number of terminal beams of the terminal and information about beam selection capability of the terminal. In another example, the SeNB base station to be notified of the terminal beam related information may be only a base station listed on a neighboring cell list of the SeNB base station with which the terminal communicates.

### Fourth Modification of First Embodiment

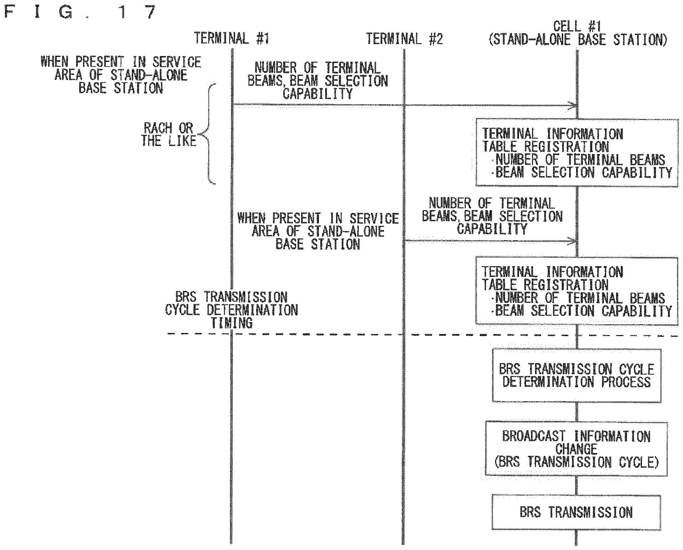

The first embodiment and the first modification of the first embodiment suppose the system of the DC configuration in which the LTE base station is deployed as the MeNB base station and the 5G base station is deployed as the SeNB base station. In another example, a stand-alone 5G base station may be deployed as the MeNB base station. In such a case, a notification message from the MeNB base station to the SeNB base station is unnecessary as illustrated in FIG. 17.

### Fifth Modification of First Embodiment

In the first embodiment and in the first modification of the first embodiment, when terminals are present in the service area of the MeNB base station, the SeNB base station connected under the MeNB base station is notified of the terminal beam related information. Here, the terminal beam related information in the first embodiment is information about the number of terminal beams of the terminal, whereas the terminal beam related information in the first modification of the first embodiment includes information about the number of terminal beams of the terminal and information about beam selection capability of the terminal.

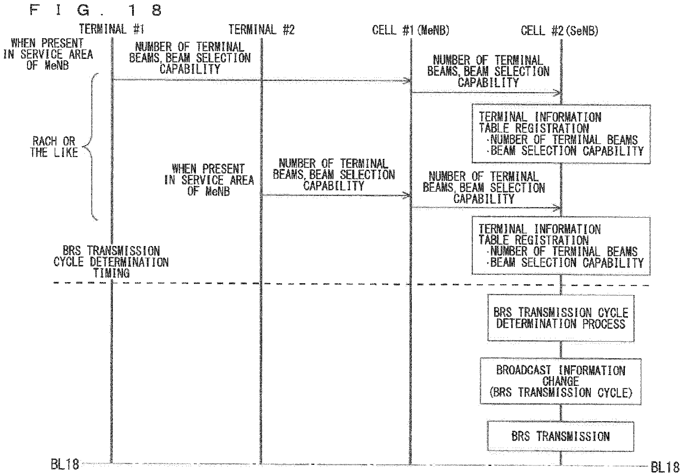

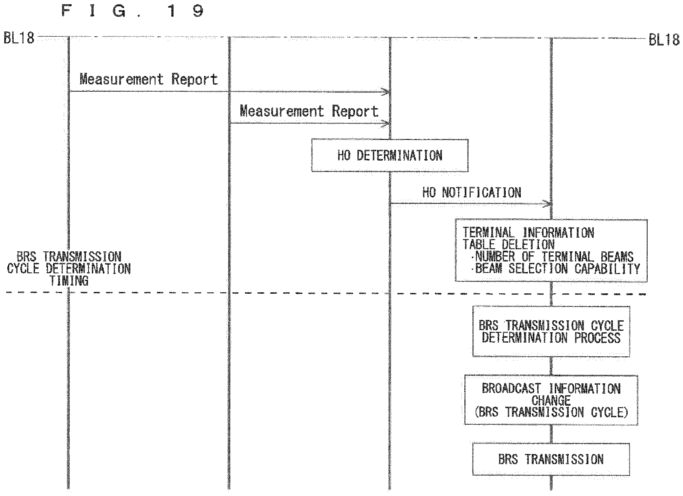

The fifth modification describes an example of a procedure of a case where the terminal performs handover (HO), with reference to FIG. 18 and FIG. 19 (continued at the position of the border line BL18). When the MeNB base station determines, based on a measurement report from the terminal, handover of the terminal to another MeNB base station or another SeNB base station, the MeNB base station notifies the SeNB base station running under the MeNB base station that the terminal was handed over to another base station, to cause the SeNB base station to remove the terminal beam related information used in the BRS transmission cycle determination process of the SeNB base station from a terminal information table.

### Second Embodiment

In the first embodiment and in the first to fifth modifications of the first embodiment, the BRS transmission cycle is determined, based on an assumption that combinations of the base station beams and the terminal beams are constantly searched. As described above, when searching combinations of the base station beams and the terminal beams is needed because a certain terminal enters a service area of a certain base station, all the combinations of the beams are searched and then an optimal combination of the beams is selected. However, the operation of transmitting the BRSs repeatedly as many times as necessary for all the combinations of the beams of the base station beams and the terminal beams even to a terminal that once completed beam selection has a problem in that a radio resource is wastefully consumed.

For example, in the second embodiment and in first and second modifications of the second embodiment described later, the BRS transmission cycle is dynamically changed according to a beam selection state of the terminals.

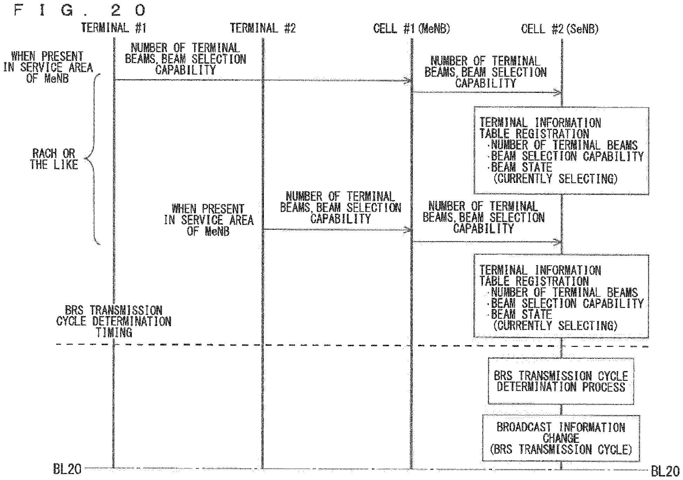

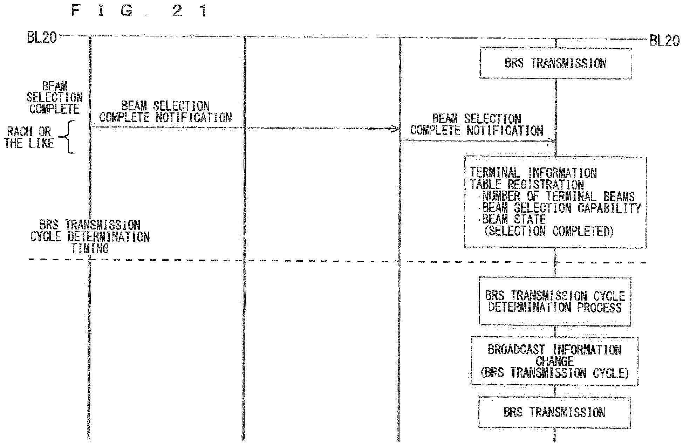

In the second embodiment, as illustrated in FIG. 20 and FIG. 21 (continued at the position of the border line BL20), the terminal transmits a "beam selection complete notification" message, notifying that selection of the combination of the base station beam and the terminal beam has completed in the terminal, to the SeNB base station via the MeNB base station. With this configuration, the SeNB base station can know the beam selection state of the terminal.

The SeNB base station knows, via the MeNB base station, that the terminal has entered the service area at the time point when the terminal entered the service area. Then, the SeNB base station registers, in the terminal information table of the SeNB base station, "currently selecting beam" as information about the beam selection state of the terminal as well as the terminal beam related information (here, information about the number of terminal beams and the beam selection capability) of the terminal.

Further, when the SeNB base station receives the beam selection complete notification from the terminal, the SeNB base station changes the beam selection state of the terminal information table from the "currently selecting beam" to "beam selection completed."

With this configuration, in the BRS transmission cycle determination process performed in every BRS transmission cycle, only the terminals having the beam selection state of "currently selecting beam" can be searched among a list of the terminal information table. Further, the BRSs can be transmitted in the BRS transmission cycle, in accordance with a terminal having the largest number of beams and a terminal having the lowest beam selection capability (i.e., the number of terminal beams that can be simultaneously received), among the terminals with "currently selecting beam." Therefore, wasteful consumption of a radio resource can be avoided.

According to the second embodiment, the following configuration is provided, for example.

Provided is a communication system including a base station device, and at least one terminal device configured to be connected to the base station device so as to perform radio communication with the base station device. More specifically, the base station device is configured to control a plurality of base station beams having different beam directions. The base station device transmits a reference signal through a corresponding base station beam. The reference signal is specific to each of the plurality of base station beams used by the at least one terminal device to measure reception quality of a signal from the base station device.

The at least one terminal device notifies the base station device of terminal beam related information. The terminal beam related information concerns at least one terminal beam formed by the at least one terminal device. The base station device controls transmission of the reference signal through the plurality of base station beams, based on the terminal beam related information.

Particularly, when the at least one terminal device completes selection of one of combinations of the at least one terminal beam of the at least one terminal device and the plurality of base station beams, the at least one terminal device notifies the base station device of beam selection complete. The base station device re-determines a number of times of transmission of the reference signal through the plurality of base station beams, excluding a terminal device that has already notified the base station device of the beam selection complete.

According to this configuration, the problem described above can be solved, and the effect described above can be obtained.

### First Modification of Second Embodiment

In the second embodiment, the BRS transmission cycle of the base station is changed, according to the beam selection state of the terminals. Here, the BRS transmission of the base station is performed in all beam directions at all times. Therefore, in a state that all the terminals have completed beam selection, the BRSs are still transmitted in beam directions not used for beam selection. Therefore, there is a problem in that a radio resource is wastefully consumed.

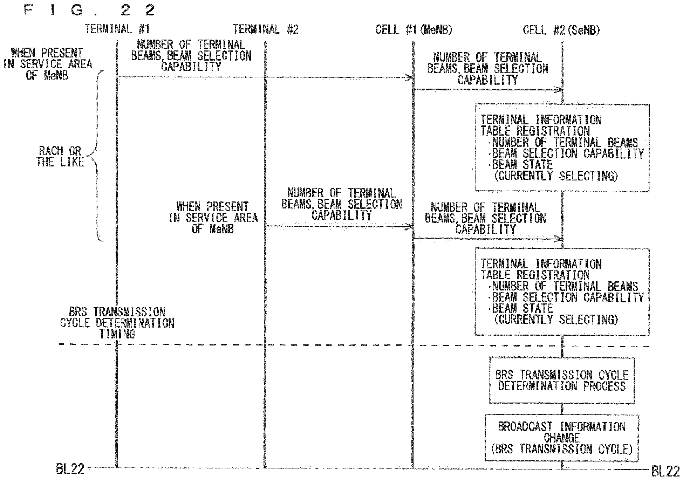

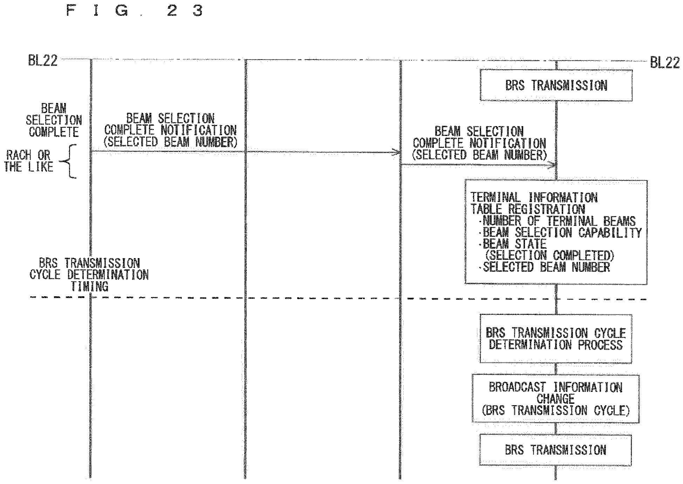

In the first modification, as illustrated in FIG. 22 and FIG. 23 (continued at the position of the border line BL22), the terminal transmits a "beam selection complete notification" message, notifying that selection of the combination of the base station beam and the terminal beam has completed in the terminal, to the SeNB base station via the MeNB base station. In this case, the terminal includes a number assigned to the selected base station beam in the "beam selection complete notification." With this configuration, the SeNB base station can know the beam selection state of the terminal and the selected base station beam.

The SeNB base station knows, via the MeNB base station, that the terminal has entered the service area at the time point when the terminal entered the service area. Then, the SeNB base station registers, in the terminal information table of the SeNB base station, "currently selecting beam" as information about the beam selection state of the terminal as well as the terminal beam related information (here, information about the number of terminal beams and the beam selection capability) of the terminal.

Further, when the SeNB base station receives the beam selection complete notification from the terminal, the SeNB base station changes the beam selection state of the terminal information table from the "currently selecting beam" to "beam selection completed." In this case, particularly in the first modification, the SeNB base station knows the number assigned to the base station beam selected by the terminal, based on the beam selection complete notification. Then, the SeNB base station records the number in the terminal information table.

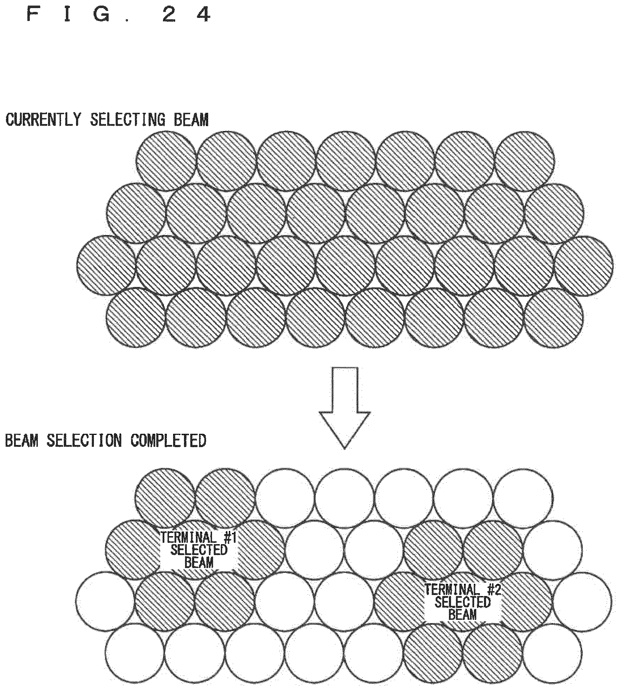

With this configuration, in the BRS transmission cycle determination process performed in every BRS transmission cycle, the following operation can be performed, based on a list of the terminal information table. Specifically, as illustrated in FIG. 24, when there are terminals having the beam selection state of "currently selecting beam," the BRSs can be transmitted in the BRS transmission cycle, in accordance with a terminal having the largest number of beams and a terminal having the lowest beam selection capability (i.e., the number of terminal beams that can be simultaneously received), among the terminals with "currently selecting beam."

On the other hand, when there are not terminals with "currently selecting beam," the BRSs can be transmitted to, for the terminal in "beam selection completed," only the base station beam selected by the terminal and to neighboring base station beams of the selected base station beam. Therefore, wasteful consumption of a radio resource can be avoided.

### Second Modification of Second Embodiment

In the first modification of the second embodiment, the BRS transmission cycle of the base station and the base station beams through which the BRSs are transmitted are changed, according to the beam selection state of the terminals. Here, there may be a state in which communication is possible only in a position or a path other than the neighboring beams of the selected beam, due to a movement of the terminal and a change in a channel environment. In such a case, the terminal needs to perform beam selection concerning the combinations of the base station beams and the terminal beams again. However, the configuration of the first modification of the second embodiment has a problem in that there is no trigger for bringing the base station beams back to the BRS transmission for the entire area.

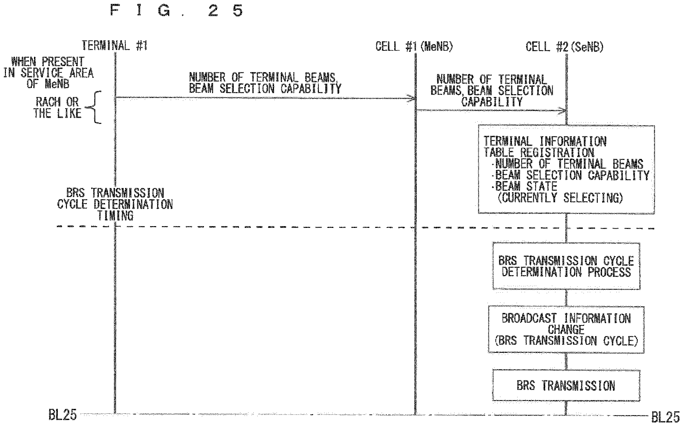

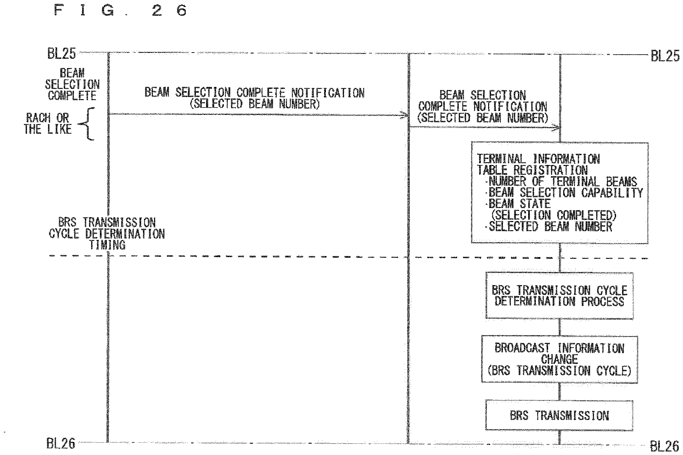

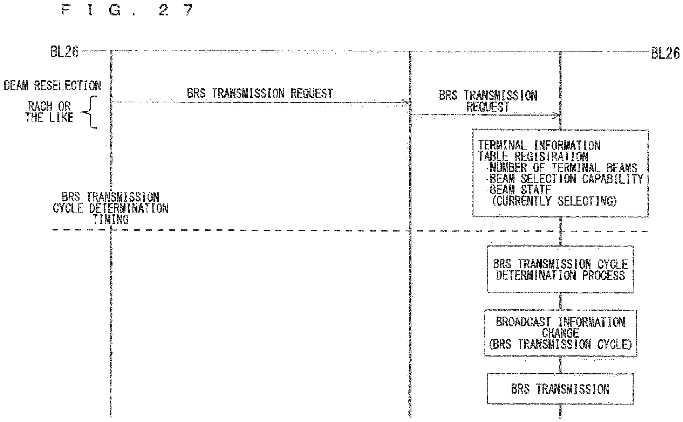

In the second modification, as illustrated in FIG. 25 to FIG. 27 (continued at the positions of the border lines BL25 and BL26), when re-acquisition of the base station beams is required in the terminal, the terminal transmits a "BRS transmission request" message, requesting BRS transmission in all beam directions, to the SeNB base station, such that the terminal reselects the combination of the base station beam and the terminal beam. This BRS transmission request is used as a trigger for the SeNB base station to bring the beam selection state of the terminal back to "currently selecting beam."

Specifically, when the SeNB base station receives the "BRS transmission request" from the terminal, the SeNB base station changes the beam selection state from "beam selection completed" to "currently selecting beam" and erases the number assigned to the selected base station beam in the terminal information table related to the terminal.

With this configuration, the BRSs can be transmitted through all the base station beams to the terminal that became unable to select a combination of the base station beam and the terminal beams. Therefore, the terminal can become able to select a combination of the base station beam and the terminal beam again.

### Third Embodiment

In the system in which both the base station and the terminal form beams by using a multi-element antenna, it is considered that the base station performs beam allocation control, irrespective of a type and a communication state of the terminals present in the service area of the base station. Particularly, a configuration in which the base station periodically transmits a downlink reference signal specific to each beam (beam specific RS (BRS)) such that reception quality of each beam of the base station can be measured has been studied.

In the system as described above, when the terminal includes a function of forming beams, it is assumed that the base station determines a transmission time period of the BRS in consideration of beam control time of the terminal, such that all the terminals including the beam function can receive the BRS. For example, when the base station supports 16 beam directions and the terminal supports a maximum of 8 beam directions, there are 16 × 8 = 128 combinations, and a BRS transmission time period in which all of the 128 combinations can be handled is secured.

It may also be considered that even a high-performance terminal supporting formation of a plurality of beams does not practically use a plurality of beams, depending on a use condition. For example, it is considered that a stopping terminal has a constant position relationship with the base station, and thus selects beams mostly in similar directions to communicate. In such a case, there is no need to constantly measure the BRS for measuring reception quality.

Further, when the BRS is transmitted in consideration only of capability of the terminal, the transmission may be substantially redundant BRS transmission. Therefore, it is considered that measurement of reception quality concerning all the combinations of the terminal beams and the base station beams may lead to reduction in spectral efficiency.

For example, in the third embodiment and in first to third modifications of the third embodiment described later, beam selection control time is changed, based on a movement speed of the terminal and required quality of service (QoS).

The third embodiment describes an example in which a measurement report is used for notification of the terminal information in the DC configuration.

In the configuration including a plurality of terminals including a beamforming function, intervals of control time for beam selection are dynamically changed for each terminal, based on a movement speed of the terminal, required QoS, and a transmission/reception data amount. With this configuration, only substantially necessary BRSs are transmitted, to overcome the problem described above and to enhance spectral efficiency.

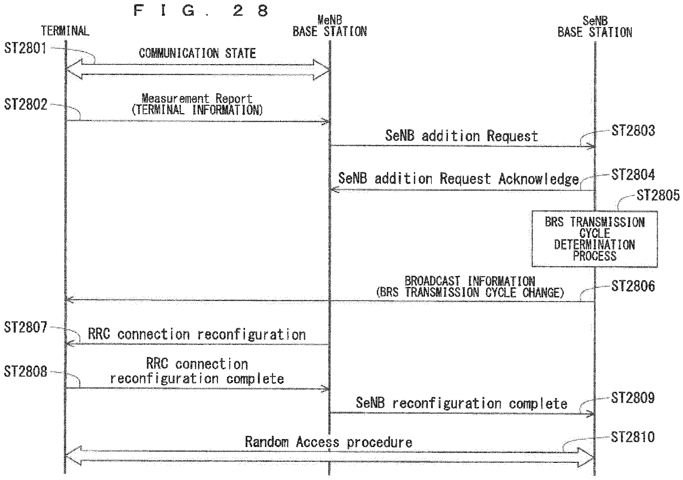

With reference to FIG. 28, when the SeNB base station is a base station supporting beamforming in the DC (dual connectivity) configuration, an example in which a beam selection cycle of the base station is dynamically changed in a process of adding the SeNB base station is described.

The MeNB base station and the terminal are in a communication state in Step ST2801. In Step ST2802, the terminal reports a movement speed of the terminal through a measurement report. In Step ST2803, the MeNB base station reports an SeNB addition request to the SeNB base station. In this case, the movement speed information of the terminal is notified together. In Step ST2804, when the SeNB base station can accept the terminal, the SeNB base station sends back an acknowledge to the SeNB addition request.

In Step ST2805, the SeNB base station determines a cycle and time of beam selection concerning the BRS transmission performed by the SeNB base station, based on the number of supported beam formation and the terminal movement speed concerning the terminal present in the service area and the terminal that is to be newly added to the service area (BRS transmission cycle determination process). The determination method will be described later.

In Step ST2806, the SeNB base station changes the cycle and time of beam selection concerning the BRS transmission, and notifies each terminal of the cycle and time of beam selection, through broadcast information at that time point. The notification method to each terminal may be through the broadcast information, or may be an RRC message for each terminal.

In Step ST2807, the MeNB base station notifies the terminal of a configuration signal of a radio resource (RRC connection reconfiguration). The terminal configures a radio resource according to this configuration signal, and transmits a configuration complete (RRC connection reconfiguration complete) in response to the configuration signal to the MeNB in Step ST2808. When the MeNB receives the complete notification from the terminal, the MeNB transmits a complete notification (SeNB reconfiguration complete) to the SeNB base station in Step ST2809. After Step ST2808 described above, in Step ST2810, the terminal starts synchronization establishment processing (random access procedure) with the SeNB base station, and establishes communication with the SeNB base station.

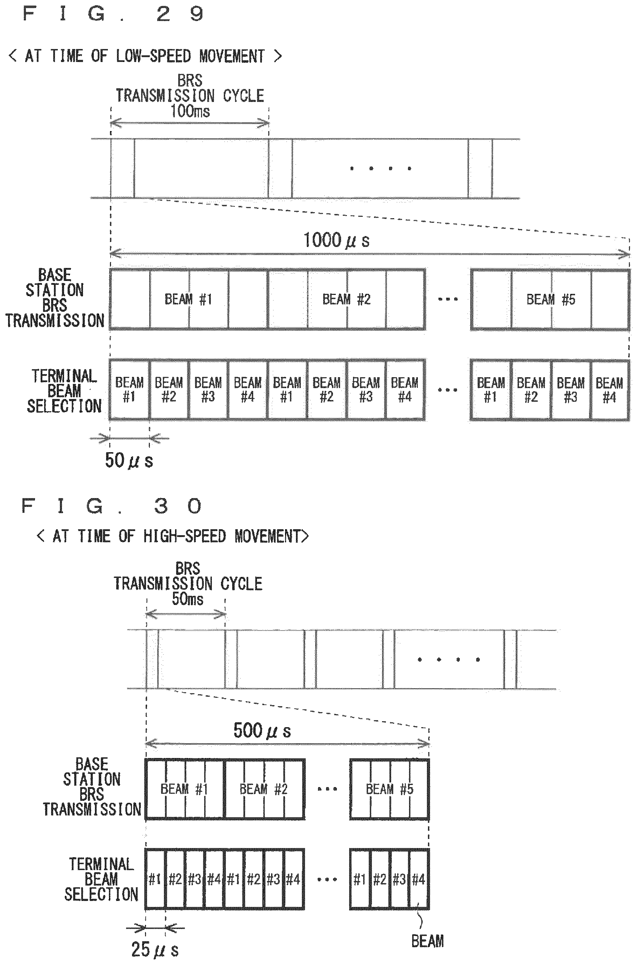

In the BRS transmission cycle determination process of Step ST2805 described above, the cycle and time of beam selection concerning the BRS transmission performed by the SeNB base station are determined in the following manners a) to c), for example.
a) When the movement speed of the terminal is high (when the movement speed is fast), the transmission time period per beam is reduced to reduce the transmission cycle, such that beam selection can be performed in a short time period. For example, in a normal case (here, at the time of low-speed movement), as illustrated in FIG. 29, a transmission interval (transmission cycle) of the BRSs is set to 100 ms, and the beams are transmitted in each transmission cycle during 1 ms (= 1000 µs). In this case, a measurement unit time period per combination of one beam of the SeNB base station and one beam of the terminal is 50 µs.
   In contrast, at the time of high-speed movement, as illustrated in the example of FIG. 30, the transmission cycle of the BRSs is set to 50 ms, and the beams are transmitted in each transmission cycle during 0.5 ms (= 500 µs). In this case, a measurement unit time period per combination of one beam of the SeNB base station and one beam of the terminal is 25 µs. With this configuration, the measurement time per one combination is reduced. Reduction in the measurement time may lead to reduction in measurement accuracy; however, reduction in the measurement cycle makes it easy to follow the movement between beams. According to this method, an occupancy rate of the BRS is not changed, and thus the method can be implemented without reducing spectral efficiency.
b) When a certain measurement accuracy is maintained even if the movement speed of the terminal is high, a method in which only the transmission cycle of the BRS is reduced and each transmission time period is not changed is also considered. For example, the transmission cycle is set to 100 ms, and the transmission time period is set to 1 ms. According to this method, even when the movement speed of the terminal is high, beam selection can be performed without reducing the measurement accuracy. Further, when the movement speed of the terminal is low, the transmission cycle is lengthened to reduce the occupancy rate of the transmission of the BRSs. Consequently, spectral efficiency can be enhanced.
c) Even when the transmission cycle is reduced as in a) described above, it is considered that the cycle of beam allocation may not catch up with the movement of the terminal. In view of this, a mode in which BRS data is transmitted in the same transmission time period also to a position of neighboring beams of the selected beam is provided, to enable reception of the BRS data also in the position of the neighboring beams. Data can be received also in the position of the neighboring beams, and thus there is an advantage in that data can be received even when the beam control cannot catch up with the movement of the terminal.

The cycle and time of beam selection in the BRS transmission may be determined in consideration of information of an unmoving terminal (fixedly installed terminal), other than the movement speed of the terminal. For example, it is considered that information about an unmoving terminal is used in Step ST2802 and Step ST2805 described above. Specifically, information that can distinguish between a moving terminal and an unmoving terminal (fixedly installed terminal) is added to the parameter of the terminal information to be transmitted in Step ST2802.

Then, in the BRS transmission cycle determination process of Step ST2805, the SeNB base station connected only to the fixedly installed terminal omits the beam selection control. For example, in Step ST2803, the beam selection control is performed on when the terminal newly enters the service area, whereas the beam selection control is omitted when the terminal remains in the service area to fix the beams to be used. In this manner, unnecessary BRS transmission is reduced, and spectral efficiency can be enhanced.

The cycle and time of beam selection in the BRS transmission may be determined in consideration of the required quality of service (QoS) of each terminal. For example, it is considered that the required QoS is used in Step ST2802 and Step ST2805 described above. Specifically, required QoS information is added to the parameter of the terminal information to be transmitted in Step ST2802.

Then, in the BRS transmission cycle determination process of Step ST2805, when there is a terminal with high required QoS present in the service area, the transmission cycle of the BRS is reduced to enhance the measurement accuracy of the BRS. Alternatively, the transmission cycle is maintained constant, and each transmission time period is increased to thereby enhance the measurement accuracy. Here, for example, the terminal with high required QoS is a terminal that puts emphasis on no occurrence of data error to perform FTP or the like.

In contrast, for example, it is considered that a terminal with low required QoS is a terminal for playing a streaming video, or the like. The required QoS can be selected not only by the terminal itself, but also by an application operating in the terminal. It is also possible that, when there is a terminal with low required QoS present in the service area, the transmission cycle of the BRS is lengthened or the transmission time period is reduced to increase a transmission period of user data to thereby enhance spectral efficiency.

The cycle and time of beam selection in the BRS transmission may be determined in consideration of a transmission and reception data amount of the terminal and the SeNB base station. For example, it is considered that the transmission and reception data amount of the terminal and the SeNb base station is used in Step ST2802 and Step ST2805 described above. Specifically, a transmission data (UL data) amount from the terminal is added to the parameter of the terminal information to be transmitted in Step ST2802.

The base station acquires a transmission data (DL data) amount in a transmission buffer for the terminal. As another method, the transmission data amount may be determined by an application used in the terminal, and may be notified to the base station. When the transmission and reception data amount is large, a high-rank modulation signal (e.g., 256 QAM) is used, and thus measurement accuracy of the BRS needs to be enhanced.

Therefore, in the BRS transmission cycle determination process of Step ST2805, when there is a terminal with a large transmission and reception data amount present in the service area, the transmission cycle of the BRS is reduced to enhance the measurement accuracy of the BRS. Alternatively, the transmission cycle is maintained constant, and each transmission time period is increased to thereby enhance the measurement accuracy.

In contrast, when there is a terminal with a small transmission and reception data amount, even if the measurement accuracy of the beam selection is low, a coded rate is reduced to increase redundancy to enable transmission and reception. Thus, it is also considered possible that the transmission cycle of the BRS is lengthened, and that the transmission time period is reduced.

To report the terminal information from the terminal to the MeNB base station, a measurement report may be used as in Step ST2802 described above, or the terminal information may be added to the control information (such as an RRC message, a medium access control (MAC) control element (MAC CE), and a PUCCH).

The control method of the beam selection of the BRS transmission described in the third embodiment can be not only applied to the BRS transmission, but can also be applied to the beam selection control at the time of the random access procedure.

According to the third embodiment, the following configuration is provided, for example.

Provided is a communication system including a base station device, and at least one terminal device configured to be connected to the base station device so as to perform radio communication with the base station device. More specifically, the base station device is configured to control a plurality of base station beams having different beam directions.

The base station device transmits a reference signal through a corresponding base station beam. The reference signal is specific to each of the plurality of base station beams used by the at least one terminal device to measure reception quality of a signal from the base station device. The at least one terminal device notifies the base station device of terminal beam related information. The terminal beam related information concerns at least one terminal beam formed by the at least one terminal device.

The base station device controls transmission of the reference signal through the plurality of base station beams, based on the terminal beam related information. Particularly, the at least one terminal device notifies the base station device of a movement speed of the at least one terminal device. The base station device determines a transmission interval of the reference signal through the plurality of base station beams for each of the at least one terminal device, according to the movement speed.

According to this configuration, the problem described above can be solved, and the effect described above can be obtained.

### First Modification of Third Embodiment

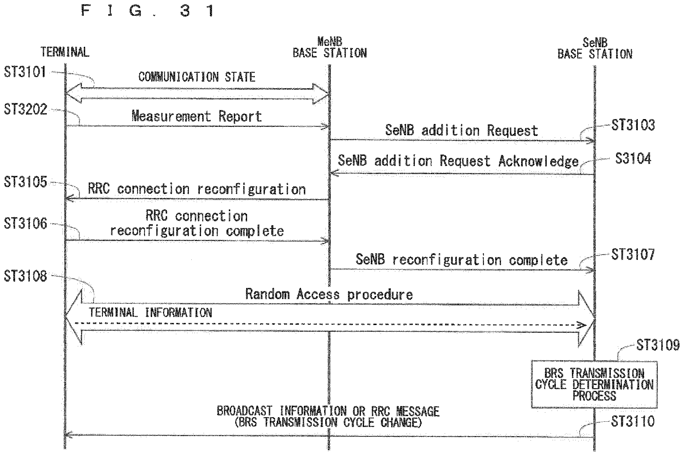

The first modification describes an example in which a RACH is used for notification of the terminal information in the DC configuration. The DC (dual connectivity) configuration is applied similarly to the third embodiment; however, in the first modification, the terminal information is directly reported from the terminal to the SeNB base station. Because the terminal information is directly reported to the SeNB base station without the MeNB base station, a load on the MeNB base station can be reduced. FIG. 31 illustrates a control sequence of the first modification.

The MeNB base station and the terminal are in a communication state in Step ST3101. In Step ST3102, the terminal reports a movement speed of the terminal through a measurement report. In Step ST3103, the MeNB base station reports an SeNB addition request to the SeNB base station. In Step ST3104, when the SeNB base station can accept the terminal, the SeNB base station sends back an acknowledge to the SeNB addition request.

In Step ST3105, the MeNB base station notifies the terminal of a configuration signal of a radio resource (RRC connection reconfiguration). The terminal configures a radio resource according to this configuration signal, and transmits a configuration complete (RRC connection reconfiguration complete) in response to the configuration signal to the MeNB in Step ST3106. When the MeNB receives the complete notification from the terminal, the MeNB transmits a complete notification (SeNB reconfiguration complete) to the SeNB base station in Step ST3107.

After Step ST3107 described above, in Step ST3108, the terminal starts synchronization establishment processing (random access procedure) with the SeNB base station, and establishes communication with the SeNB base station. The terminal adds terminal information (such as a movement speed of the terminal, whether or not the terminal is moving, required QoS, and a transmission and reception data amount between the terminal and the SeNB base station) to a part of the random access channel (RACH) in the synchronization establishment processing.

In Step ST3109, the SeNB base station determines a cycle and time of beam selection concerning the BRS transmission performed by the SeNB base station, based on the number of supported beam formation and the terminal movement speed concerning the terminal present in the service area and the terminal that has been newly added to the service area (BRS transmission cycle determination process). The determination method is similar to that of the third embodiment, for example.

In Step ST3110, the SeNB base station changes the cycle and time of beam selection concerning the BRS transmission, and notifies each terminal of the cycle and time of beam selection, through broadcast information at that time point. The notification method to each terminal may be through the broadcast information, or may be an RRC message for each terminal.

### Second Modification of Third Embodiment

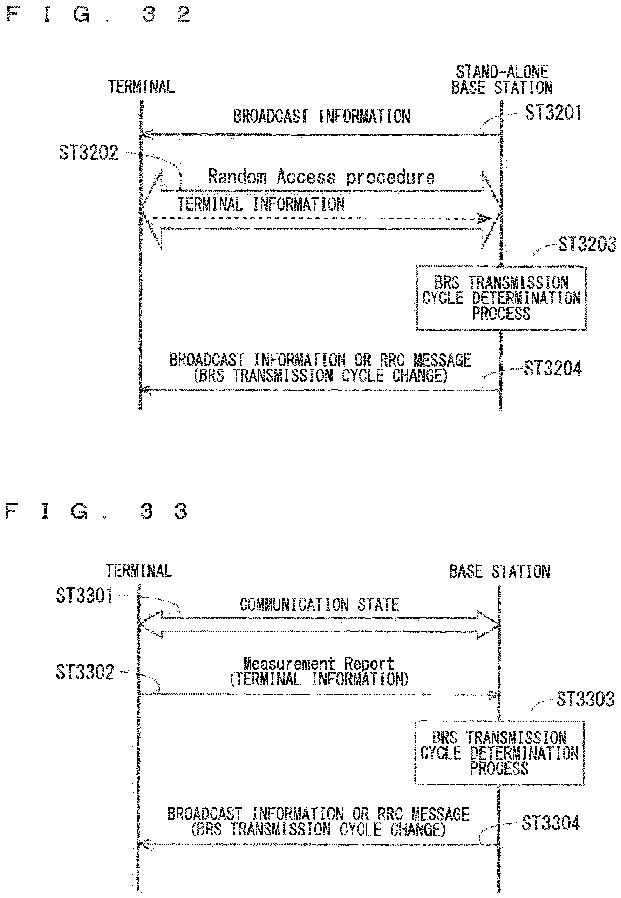

The second modification describes control in a configuration including a stand-alone base station. Also with a stand-alone base station, the transmission state of the BRS can be changed in accordance with the terminal present in the service area, and thus spectral efficiency can be enhanced. FIG. 32 illustrates a control sequence of the second modification.

In Step ST3201, the base station transmits broadcast information to the terminal. The information also includes beam allocation information. In Step ST3202, the terminal starts synchronization establishment processing (random access procedure) with the base station, and establishes communication with the base station. The terminal adds terminal information (such as a movement speed of the terminal, whether or not the terminal is moving, required QoS, and a transmission and reception data amount between the terminal and the base station) to a part of the random access channel (RACH) in the synchronization establishment processing.

In Step ST3203, the base station determines a cycle and time of beam selection concerning the BRS transmission performed by the base station, based on the number of supported beam formation and the terminal movement speed concerning the terminal present in the service area and the terminal that has been newly added to the service area (BRS transmission cycle determination process). The determination method is similar to that of the third embodiment, for example.

In Step ST3204, the base station changes the cycle and time of beam selection concerning the BRS transmission, and notifies each terminal of the cycle and time of beam selection, through broadcast information at that time point. The notification method to each terminal may be through the broadcast information, or may be an RRC message for each terminal.

### Third Modification of Third Embodiment

The third modification describes control to change the cycle and time of beam selection while the terminal and the base station are in a communication state after the synchronization establishment processing. The base station in this case may be an SeNB of the DC configuration, or a base station of the stand-alone configuration. According to the third modification, the cycle and time of beam selection can be changed to be optimized, according to the communication state of the terminal while the terminal is in communication, as well as at the time of initial connection of the terminal described in the third embodiment. Therefore, spectral efficiency can be further enhanced as compared to that of the third embodiment, and communication quality according to the connection state of the terminal can be secured. FIG. 33 illustrates a control sequence of the third modification.

The base station and the terminal are in a communication state in Step ST3301. In Step ST3302, the terminal reports terminal information (such as a movement speed of the terminal, whether or not the terminal is moving, required QoS, and a transmission and reception data amount between the terminal and the base station) through a measurement report. In a case of the DC configuration, the measurement report may be reported via the MeNB base station, or may be directly notified to the SeNB.

In Step ST3303, the base station determines a cycle and time of beam selection concerning the BRS transmission performed by the base station, based on the number of supported beam formation and the terminal movement speed concerning the terminal present in the service area (BRS transmission cycle determination process). The determination method is similar to that of the third embodiment, for example.

In Step ST3304, the base station changes the cycle and time of beam selection concerning the BRS transmission, and notifies each terminal of the cycle and time of beam selection, through broadcast information at that time point. The notification method to each terminal may be through the broadcast information, or may be an RRC message for each terminal.

If there are a plurality of terminals present in the service area, when the cycle and time of beam selection concerning the BRS transmission are changed in every measurement report of all the terminals, more load is imposed on both the base station and the terminals. Therefore, when the base station performs update processing in a predetermined cycle, the load can be reduced.

Further, in case the terminal state abruptly changes, it is also preferable that a threshold value be set in advance for various parameters of the terminal information (such as a movement speed of the terminal, whether or not the terminal is moving, required QoS, and a transmission and reception data amount between the terminal and the base station). The threshold value may be a threshold value of the measurement value itself, or a threshold value of a change amount.

When the parameter exceeds the threshold value, changing the cycle and time of beam selection concerning the BRS transmission can maintain communication quality, even if the terminal state abruptly changes. Note that it is considered that such an abrupt change of the terminal state in many cases occurs at a timing apart from the predetermined cycle.

When the number of terminals present in the service area is reduced during communication, i.e., when a link between a certain terminal and the base station is cut off, the cycle and time of beam selection concerning the BRS transmission is changed at the timing when the link is cut off. In such a manner, the cycle and time of beam selection can be reconfigured for the terminals present in the service area and maintaining connection with the base station, and the BRS transmission can be optimized. Consequently, spectral efficiency can be further enhanced as compared to that of the third embodiment, and communication quality according to the connection state of the terminal can be secured.

### Fourth Embodiment

It is considered that the configuration in which the base station uses notification information of the terminal to change the beam selection cycle and the transmission time period of the BRS transmission as in the third embodiment can contribute to enhancement in spectral efficiency and enhancement in communication quality. However, when the terminal to be connected to the base station can be predicted, for example, the same information may be reported every time as information of the control sequence exchanged between the terminal and the base station for updating the beam selection cycle. In such a case, many losses may be generated in the control sequence itself.

The fourth embodiment describes creation of a mode in which the best beam of the terminal is selected only by the terminal. As a system, the fourth embodiment describes a configuration also allowing selection of a mode that enables operation without the use of information about capability (category information) of the terminal and the beam selection of the terminal.

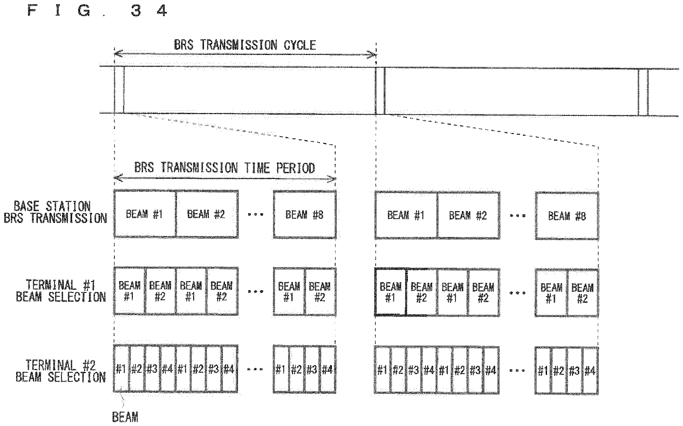

FIG. 34 illustrates a method of selecting beams of the terminals having different numbers of supported beams for the BRS transmission of the base station. FIG. 34 illustrates an example in which the base station has eight beam radiation directions, the terminal #1 has two beam radiation directions, and the terminal #2 has four beam radiation directions. The base station has a constant beam selection cycle and transmission time period of the BRSs, irrespective of the state of the terminals present in the service area. In contrast, the terminal #1 has beams supported in two directions, and therefore changes the beam directions with a unit time period being 1/2 of the same beam radiation time period of the base station.

The terminal #2 has beams supported in four directions, and therefore changes the beam directions with a unit time period being 1/4 of the same beam radiation time period of the base station. With this configuration, the base station can perform the beam selection, irrespective of the number of supported beams of the terminals and the connection state of the terminals. Therefore, a processing load of the base station can be reduced.

Further, in the fourth embodiment, the base station adds information indicating "whether or not BRS beam selection operation is performed without taking the information of the terminal into consideration" to the broadcast information. This information indicates ON/OFF of dynamic BRS beam selection operation, and thus can be expressed by at least 1 bit.

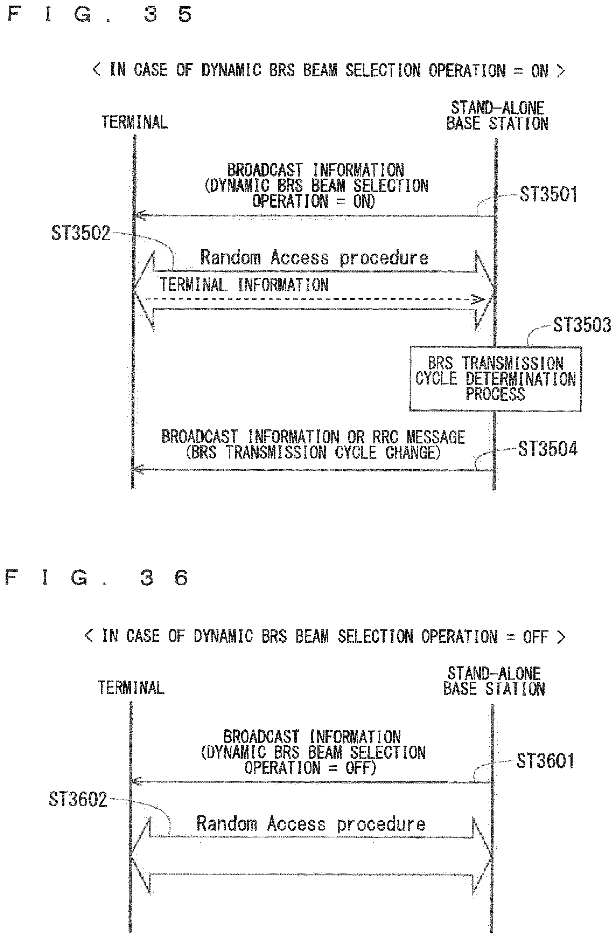

FIG. 35 and FIG. 36 illustrate a control sequence of a case of a stand-alone base station. FIG. 35 illustrates a case where the dynamic BRS beam selection operation is ON, and FIG. 36 illustrates a case where the dynamic BRS beam selection operation is OFF.

When the dynamic BRS beam selection operation is ON, as illustrated in FIG. 35, in Step ST3501, the base station notifies the terminal of information about dynamic BRS beam selection operation ON, through broadcast information. When the terminal confirms the dynamic BRS beam selection operation ON in Step ST3501, the terminal notifies the base station of various pieces of information in the random access procedure in Step ST3502.

Examples of the various pieces of information to be notified include the number of supported beams of the terminal, and terminal information (such as a terminal movement speed, whether or not the terminal is moving, required QoS, and a transmission and reception data amount between the terminal and the base station). In Step ST3503, the base station determines a BRS transmission cycle, based on the terminal information. In Step ST3504, the base station notifies the terminal of the transmission cycle and the transmission time period of the BRS, through broadcast information. An RRC message may be used, instead of the broadcast information.

On the other hand, when the dynamic BRS beam selection operation is OFF, as illustrated in FIG. 36, in Step ST3601, the base station notifies the terminal of information about dynamic BRS beam selection operation OFF, through broadcast information. After that, in Step ST3602, the random access procedure is started.

When the dynamic BRS beam selection operation is OFF, the base station performs beam selection of the BRS transmission in a fixed cycle, irrespective of the number of supported beams of the terminal and the terminal information. Further, when the terminal confirms the dynamic BRS beam selection operation OFF through the broadcast information in Step ST3601, the terminal may stop transmitting the terminal information to the base station.

In such a manner, a control load of the terminal can be reduced. Further, as illustrated in FIG. 34, when the terminal itself supports beam control, the beam selection control of the terminal itself is performed, in accordance with the number of supported beams. The terminal may perform the beam selection control by using signals of a plurality of BRS cycles, in consideration of the movement speed or the like of the terminal itself.

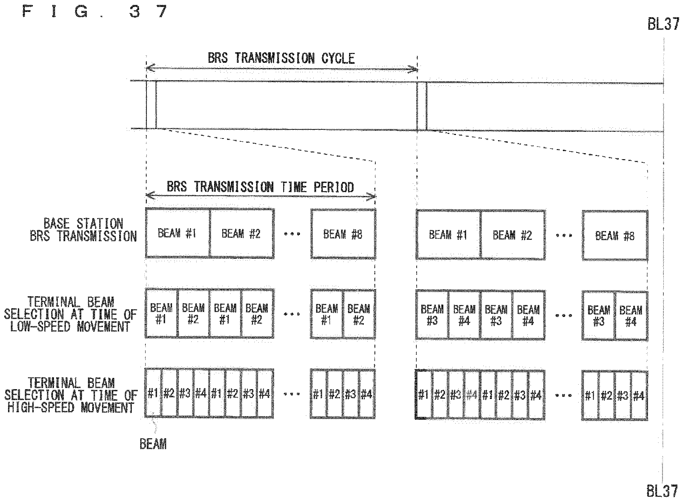

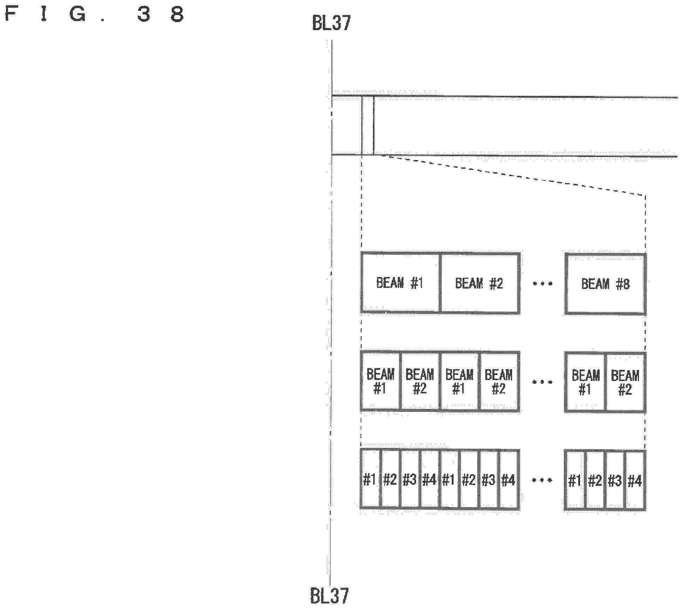

FIG. 37 and FIG. 38 (continued at the position of the border line BL37) illustrate an example of a case where the movement speed of the terminal is low and a case where the movement speed of the terminal is high. FIG. 37 and FIG. 38 illustrate an example in which the base station has eight beam radiation directions, and the terminal has four beam radiation directions. In a case of the low-speed movement, a movement distance of the terminal per BRS cycle is small, and therefore there is no problem in performing all beam selection of the terminal, using a plurality of BRS transmission cycles.

On the other hand, in a case of the high-speed movement, a movement distance of the terminal per BRS cycle is large, and therefore all beam selection of the terminal is performed in a single BRS transmission cycle. With such control, the terminal need not perform the same operation all the time, and thus a processing load can be reduced.

The fourth embodiment describes a configuration example using a stand-alone base station, similarly to the second modification of the third embodiment. When the dynamic BRS beam selection operation ON/OFF is similarly applied to the third embodiment, the first modification of the third embodiment, and the third modification of the third embodiment, a system according to the operation of the terminal can be constructed.

The control method of the beam selection of the BRS transmission described in the fourth embodiment can be applied not only to the BRS transmission, but can also be applied to the beam selection control at the time of the random access procedure.

According to the fourth embodiment, the following configuration is provided, for example.

Provided is a communication system including a base station device, and at least one terminal device configured to be connected to the base station device so as to perform radio communication with the base station device. More specifically, the base station device is configured to control a plurality of base station beams having different beam directions. The base station device transmits a reference signal through a corresponding base station beam. The reference signal is specific to each of the plurality of base station beams used by the at least one terminal device to measure reception quality of a signal from the base station device.

The at least one terminal device notifies the base station device of terminal beam related information. The terminal beam related information concerns at least one terminal beam formed by the at least one terminal device. The base station device controls transmission of the reference signal through the plurality of base station beams, based on the terminal beam related information. Particularly, the base station device has an operation mode.

The operation mode is a mode in which a transmission time period and a transmission interval of the reference signal through the plurality of base station beams are configured to be constant irrespective of the terminal beam related information. The at least one terminal device controls scanning of the at least one terminal beam of the at least one terminal device, in accordance with a number of times of transmission and the transmission interval of the reference signal that are configured to be constant.

According to this configuration, the problem described above can be solved, and the effect described above can be obtained.

### Fifth Embodiment

It is considered that, even with a system configuration in which the base station supports the beam control and can perform the beam control using the BRS or the like, the terminal does not support the beam control. Examples of such a terminal include a terminal including a low-cost communication module as a device of Internet of Things (IoT). In such a case, when the base station performs operation based on the beam control, the terminal not supporting the beam control cannot communicate with the base station.

In the fifth embodiment and in a first modification of the fifth embodiment described later, for example, a system in which the terminal can select beam use/non-use of the base station can be constructed, to solve the problem described above. According to this configuration, even a beam control unsupported terminal can establish communication with the base station.

The fifth embodiment describes an example in which the terminal selects beam use/non-use at the time of initial connection.

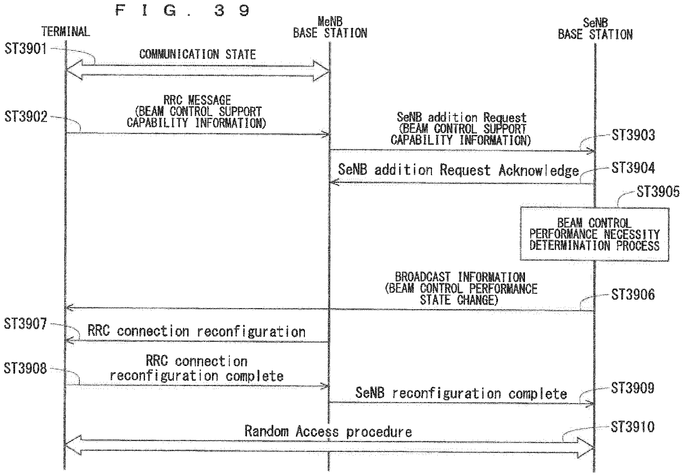

FIG. 39 illustrates an example of a dual connectivity configuration similarly to that described in the third embodiment. Here, the MeNB base station is a beam unsupported base station, and the SeNB base station is a beam supported base station.

In Step ST3901, the MeNB base station and the terminal are in a communication state. In Step ST3902, the terminal notifies the MeNB base station of a terminal beam control support state, through an RRC message or the like. The terminal beam control support state may be included in a UE category, for example. In Step ST3903, the MeNB base station reports an SeNB addition request to the SeNB. In this case, the beam control support capability of the terminal is notified. In Step ST3904, when the SeNB base station can accept the terminal, the SeNB base station sends back an acknowledge to the SeNB addition request.

In Step ST3905, the SeNB base station determines necessity of the performance of the beam control, based on the information about the beam control support capability concerning the terminal already present in the service area and the terminal to be newly added to the service area. Specifically, a) when the terminals served by the base station are only beam control supported terminals, the base station performs the beam control over all the transmission slots. b) In contrast, when the terminals served by the base station are only beam control unsupported terminals, the base station does not perform the beam control over all the transmission slots.

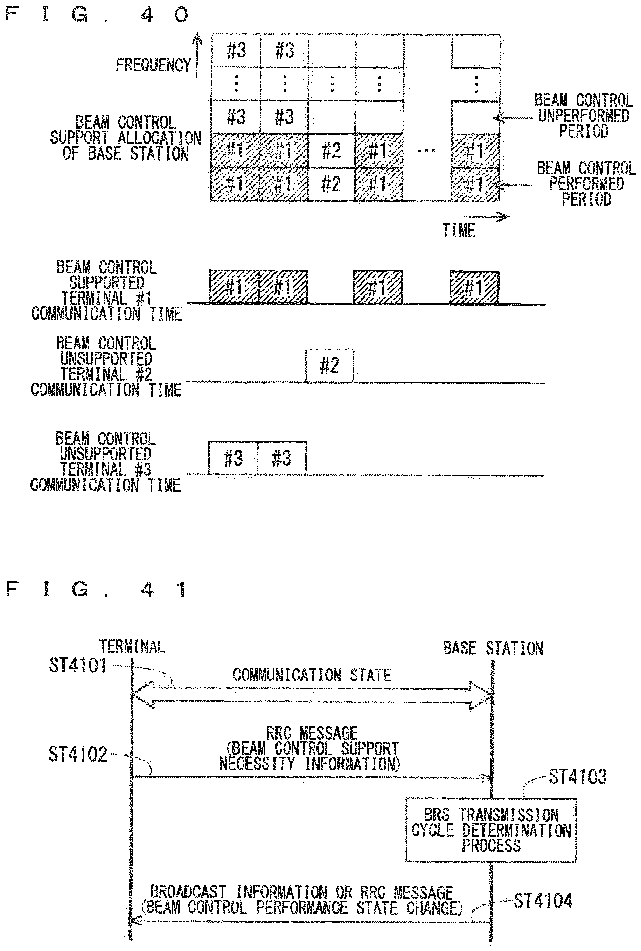

Here, to not perform the beam control refers to a state in which a transmission signal with beamforming is not generated, and a downlink reference signal specific to each beam (beam specific RS (BRS)) is not used. c) When the beam control supported terminal and the beam control unsupported terminal coexist as the terminals served by the base station, as illustrated in the example of FIG. 40, the base station provides a beam control performed period and a beam control unperformed period, through time division, frequency division, or both the time division and the frequency division.

In Step ST3906, the SeNB base station notifies each terminal of a beam control performance state (such as the beam control performed period and the beam control unperformed period), through broadcast information at the time point when the SeNB base station determines the necessity of the beam control performance. The notification method to each terminal may be through the broadcast information, or may be an RRC message for each terminal.

In Step ST3907, the MeNB base station notifies the terminal of a configuration signal of a radio resource (RRC connection reconfiguration). The terminal configures a radio resource according to this configuration signal, and transmits a configuration complete (RRC connection reconfiguration complete) in response to the configuration signal to the MeNB in Step ST3908.

When the MeNB receives the complete notification from the terminal, the MeNB transmits a complete notification (SeNB reconfiguration complete) to the SeNB base station in Step ST3909. After Step ST3908 described above, in Step ST3910, the terminal starts synchronization establishment processing (random access procedure) with the SeNB base station, and establishes communication with the SeNB base station.

According to such a system, the beam control supported terminal and the beam control unsupported terminal can be handled, and the beam unsupported terminal can also be accommodated by each base station. Enhancement and efficiency in flexibility concerning radio resource allocation among a plurality of base stations can be achieved.

The above describes an example in which the beam unsupported MeNB base station is used to connect the beam unsupported terminal in the DC configuration. The beam control supported/unsupported information of the terminal may be obtained through the random access procedure, as in the first modification of the third embodiment and the second modification of the third embodiment. In such a case, a method of employing the beam unsupported state only during the random access procedure is considered.

Alternatively, a method of providing the beam control performed period and the beam control unperformed period as illustrated in the example of FIG. 40 for the procedure of the random access period is considered. Acceding to such configurations, the beam unsupported terminal can communication with a beam control supported stand-alone base station.

According to the fifth embodiment, the following configuration is provided, for example.

Provided is a communication system including a base station device, and at least one terminal device configured to be connected to the base station device so as to perform radio communication with the base station device. More specifically, the base station device is configured to control a plurality of base station beams having different beam directions. The base station device transmits a reference signal through a corresponding base station beam. The reference signal is specific to each of the plurality of base station beams used by the at least one terminal device to measure reception quality of a signal from the base station device.

The at least one terminal device notifies the base station device of terminal beam related information. The terminal beam related information concerns at least one terminal beam formed by the at least one terminal device. The base station device controls transmission of the reference signal through the plurality of base station beams, based on the terminal beam related information. Particularly, the base station device performs communication with a beam control unsupported terminal device without performing control of the plurality of base station beams. The beam control unsupported terminal device does not include a function of controlling a plurality of terminal beams.

According to this configuration, the problem described above can be solved, and the effect described above can be obtained.

### First Modification of Fifth Embodiment

The first modification describes an example in which the terminal selects beam use/non-use for each piece of data to be communicated. Specifically, the terminal can also select beam control supported data and beam control unsupported data, according to the piece of data to be communicated, while the terminal is in communication.

For example, for data that has a low data rate but should be securely connected at the time of movement, communication that covers a wide range without the use of the beam control is selected. In contrast, for data that has a high data rate and data that completes communication in a short period of time, communication that takes advantage of spatial multiplexing or the like with the use of the beam control is selected.

FIG. 41 illustrates an example of a control sequence. In Step ST4101, the base station and the terminal are in a communication state. In Step ST4102, the terminal reports necessity as to whether or not the beam control is supported to the base station, through an RRC message or the like. In a case of the DC configuration, the RRC message may be reported via the MeNB base station, or may be directly notified to the SeNB.

Further, it is considered that there is a case where the necessity of the beam control is collectively reported by the terminal, and a case where the necessity of the beam control is reported for each type of communication data. When the necessity of the beam control is collectively changed by the terminal, there is an advantage in that control messages can be decreased. In contrast, when the necessity of the beam control is changed for each type of communication data, beam control selection according to characteristics of pieces of data is enabled, and quality required for each piece of data can be satisfied.

In Step ST4103, the base station performs scheduling of a beam control performed period and a beam control unperformed period of the base station, based on the beam control support necessity information of the terminals present in the service area.

In Step ST4104, the base station provides a beam control performed period and a beam control unperformed period, through time division, frequency division, or both the time division and the frequency division as illustrated in the example of FIG. 40. Then, the base station notifies each terminal of the beam control performed period and the beam control unperformed period, through broadcast information at that time point.

The notification method to each terminal may be through the broadcast information, or may be an RRC message for each terminal. If there are a plurality of terminals present in the service area, when the beam selection cycle of the BRS transmission is changed in every RRC message of all the terminals, more load is imposed on both the base station and the terminals. Therefore, when the base station performs update processing in a predetermined cycle, the load can be reduced.

The embodiments and the modifications are merely illustrations of the present invention, and can be freely combined within the scope of the present invention. Any constituent elements of the embodiments and the modifications can be appropriately modified or omitted.

While the invention has been described in detail, the foregoing description is in all aspects illustrative and not restrictive. It is therefore understood that numerous modifications and variations can be devised without departing from the scope of the invention.

### Explanation of Reference Signs

- 200: communication system,
- 202: terminal device,
- 203: base station device

## Claims

1. A communication system comprising:
- a base station device; and
- at least one terminal device configured to be connected to the base station device so as to perform radio communication with the base station device,
wherein the base station device is configured to control a plurality of base station beams having different beam directions,
wherein the base station device is configured to transmit a reference signal through a corresponding base station beam, the reference signal being specific to each of the plurality of base station beams used by the at least one terminal device to measure reception quality of a signal from the base station device,
wherein the at least one terminal device is configured to notify the base station device of terminal beam related information, the terminal beam related information concerning at least one terminal beam formed by the at least one terminal device, and
wherein the base station device is configured to control transmission of the reference signal through the plurality of base station beams, based on the terminal beam related information.

2. The communication system according to claim 1,
wherein the terminal beam related information includes information about a number of the at least one terminal beam formed by the at least one terminal device, and
wherein the base station device is configured to determine a number of times of transmission of the reference signal through the plurality of base station beams, according to a largest number of the at least one terminal beam.

3. The communication system according to claim 2,
wherein the terminal beam related information further includes information about beam selection capability, the beam selection capability indicating a number of the at least one terminal beam that can be simultaneously received by the at least one terminal device, and
wherein the base station device is configured to determine a number of times of transmission of the reference signal through the plurality of base station beams, according to the largest number of the at least one terminal beam and the beam selection capability.

4. The communication system according to any one of claims 1 to 3,
wherein when the at least one terminal device completes selection of one of combinations of the at least one terminal beam of the at least one terminal device and the plurality of base station beams, the at least one terminal device is configured to notify the base station device of beam selection complete, and
wherein the base station device is configured to re-determine a number of times of transmission of the reference signal through the plurality of base station beams, excluding a terminal device that has already notified the base station device of the beam selection complete.

5. The communication system according to any one of claims 1 to 4,
wherein the at least one terminal device is configured to notify the base station device of a movement speed of the at least one terminal device, and wherein the base station device is configured to determine a transmission interval of the reference signal through the plurality of base station beams for each of the at least one terminal device, according to the movement speed.

6. The communication system according to any one of claims 1 to 5,
wherein the base station device has an operation mode, the operation mode being a mode in which a transmission time period and a transmission interval of the reference signal through the plurality of base station beams are configured to be constant irrespective of the terminal beam related information, and
wherein the at least one terminal device is configured to control scanning of the at least one terminal beam of the at least one terminal device, in accordance with a number of times of transmission and the transmission interval of the reference signal that are configured to be constant.

7. The communication system according to any one of claims 1 to 6,
wherein the base station device is configured to perform communication with a beam control unsupported terminal device without performing control of the plurality of base station beams, the beam control unsupported terminal device not including a function of controlling a plurality of terminal beams.
